# EUROPEAN PATENT SPECIFICATION

(11) **EP 1 776 399 B1**
(45) Date of publication and mention of the grant of the patent: **14.11.2012**
(21) Application number: 05758969.9
(22) Date of filing: 30.06.2005
(51) Int. Cl.: C08F 293/00, C08F 220/26, C08F 220/38, C08F 2/38, C08F 20/26, C08F 20/38

(54) **MONODISPERSE POLYMERS CONTAINING (ALKYL)ACRYLIC ACID MOIETIES, PRECURSORS AND METHODS FOR MAKING THEM AND THEIR APPLICATIONS**
MONODISPERSE POLYMERE MIT (ALKYL)ACRYLSÄURE-GRUPPIERUNGEN, VORLÄUFER UND HERSTELLUNGSVERFAHREN DAFÜR UND ANWENDUNGEN DAVON
POLYMERES MONODISPERSES CONTENANT DES FRACTIONS D'ACIDE (ALKYL)ACRYLIQUE, PRECURSEURS, PROCEDES DE PRODUCTION DE CES POLYMERES ET LEURS APPLICATIONS

(30) Priority: 01.07.2004 US 584533 P; 01.04.2005 US 667537 P
(43) Date of publication of application: 25.04.2007
(73) Proprietor: Universiteit Gent, 9000 Gent (BE)
(72) Inventor: DU PREZ, Filip, E., B-9000 Gent (BE); VAN CAMP, Wim, B-9140 Temse (BE); BON, Stefan, A., F., B2 5RS Birmingham (GB)
(74) Representative: Bird, Ariane
(86) International application number: PCT/BE2005/000106
(87) International publication number: WO 2006/002496

(56) References cited:
- EP-A- 0 465 835
- EP-A- 1 398 353
- EP-A1- 1 577 326
- WO-A1-03/033556
- ELI RUCKENSTEIN, HONGMIN ZHANG: "Living anionic copolymerization of 1-(alkoxy)ethyl methacrylates with polar and/or nonpolar monomers" MACROMOLECULES, vol. 31, 1998, page 9127-9133, XP002347838
- YOSHINORI NAKANE, MASAHIRO ISHIDOYA, TAKESHI ENDO: "Synthesis and thermal dissociation of polymers having hemiacetal ester moieties" JOURNAL OF POLYMER SCIENCE: PART A: POLYMER CHEMISTRY, vol. 37, 1999, pages 609-614, XP002347864 cited in the application

## Description

The present invention relates to monodisperse or nearly monodisperse polymers and copolymers containing (α-substituted)acrylic acid moieties, precursors and methods for making them, as well as compositions comprising such polymers and copolymers for use in industrial applications where a low polydispersity index is desirable.

### BACKGROUND OF THE INVENTION

Poly(methacrylic acid) and poly(acrylic acid) are weak polyelectrolytes in which the degree of ionization is governed by the pH and ionic strength of aqueous solution. They are known to form complexes with basic molecules and inter-polymer complexes with various non-ionic proton-accepting polymers, and with cationic electrolytes and polyelectrolytes in aqueous and organic media. They are also known to be able to complex various metals, such as copper, and therefore are promising for waste water treatment. Block copolymers containing (meth)acrylic acid segments are ionic (or polyelectrolyte) block copolymers which combine structural features of polyelectrolytes, block copolymers, and surfactants.

Living polymerization techniques have been traditionally used for the synthesis of well-defined polymers where polymerization proceeds in the absence of irreversible chain transfer and chain termination, i.e. nearly ideally in anionic polymerization and less ideally in cationic polymerization. However most of these techniques are not tolerant towards functional groups in the monomers to be polymerised. Hence, protected monomers have been used, followed by polymer deprotection, e.g. by means of hydrolysis of protecting ester groups, hydrogenation techniques, and the like. Controlled radical polymerization is also provided by recent methods such as atom transfer radical polymerization (hereinafter referred as ATRP), nitroxide-mediated radical polymerization (hereinafter referred as NMP), reversible addition-fragmentation chain transfer polymerization (hereinafter referred as RAFT) and other related processes involving a degenerative transfer, such as macromolecular design via interchange of xanthates (hereinafter referred as MADIX). However, with controlled free-radical polymerisation techniques, difficulties were encountered to get well-defined homopolymers from the direct polymerisation of acidic monomers, like acrylic acid or methacrylic acid, or to get well-defined copolymers from the direct copolymerization thereof with functional methacrylates. According to Couvreur et al. in Macromolecules (2003) 36:8260-8267, acrylic acid can be polymerised at 120°C under pressure, in solution into 1,4-dioxane, or copolymerised with styrene, into (co)polymers with polydispersity indexes around 1.3 to 1.4. ATRP was not successful since neither copolymers nor homopolymers based on acrylic acid were synthesised by this technique so far. Copper (I)-mediated ATRP is quite sensitive to (meth)acrylic acid that is able to coordinate copper (I) ions and protonate nitrogen ligands, thus leading to a loss of control of polymer architecture. In order to avoid this risk, it is necessary for the protected (meth)acrylate submitted to ATRP to be stringently purified to be substantially free from (meth)acrylic acid.

Chiefari et al. in Macromolecules (1998) 31:5559-5562 reported acrylic acid RAFT polymerisation in dimethylformamide solution at 60 °C into a polymer with an average number molecular weight of 13,800 and a polydispersity index of 1.23, however with only 18% conversion after 4 hours. In addition to this disadvantage, RAFT requires thiocarbonyl compounds with a displeasant smell and which impart a colour to the resulting polymer. However RAFT shows the advantage of being insensitive to acid groups, thus making monomer purification less critical, especially when a (meth)acrylic acid ester is concerned.

U.S. Patent No. 6,777,513 discloses preparing polymers by contacting an ethylenically unsaturated monomer (including acrylic acid or methacrylic acid), a source of free radicals and a halogenated xanthate, but provides no example of a polyacrylic acid made by this so-called MADIX method. Taton et al. in Macromol. Rapid Commun. (2001) 22:1497-1503 reported the aqueous solution polymerisation of acrylic acid via MADIX into homopolymers with an average number molecular weight ranging from 2,400 to 10,300 and with a polydispersity index ranging from 1.23 to 1.35, with complete conversion within 1 to 2 hours. The MADIX method requires halogenated xanthates with a displeasant smell and which impart a colour to the resulting polymer. In addition, the RAFT and MADIX methods offer the disadvantage that a specific RAFT or MADIX polymerisation agent must be selected for each specific monomer in order to obtain both a reasonable propagation rate and the expected polymerisation control, i.e. up to now no RAFT or MADIX polymerisation agent was found suitable for a wide range of monomers, contrary to other polymerisation techniques.

Due to the unsuccessful or disadvantageous attempts to directly polymerise acrylic acid or methacrylic acid by free radical polymerisation in a controlled manner, i.e. with a polydispersity index below 1.30, protected monomers are still required to obtain well-defined polymers with (meth)acrylic acid segments. Protected (meth)acrylic acid monomers with masked acid groups include tert-butyl (meth)acrylate, benzyl methacrylate, 1-ethoxyethyl methacrylate, 1-n-butoxyethyl methacrylate, trimethylsilyl (meth)acrylate, 2-tetrahydropyranyl methacrylate (hereinafter referred as THPMA) or tert-butoxyethyl methacrylate, as shown by Mori et al. in Prog. Polym.Sci. (2003) 28: 1406. According to the latter, quantitative deprotection of the protecting groups such as the quantitative hydrolysis of poly *tert-*butyl(meth)acrylate requires strong acidic conditions such as p-toluene sulfonic acid in toluene at 100 - 110 °C for 8 - 24 hours, or concentrated hydrochloric acid in dioxane at 85 °C for 5 hours, or an excess of trifluoroacetic acid in dichloromethane at room temperature for 24 hours. Such corrosive and hazardous conditions cannot fully satisfy industrial demands for large scale production, due to both environmental consequences and cost considerations. In the case of producing block copolymers with (meth)acrylic acid segments, suitable conditions for a selective quantitative deprotection step are even more difficult to determine, in view of a substantial risk of intramolecular crosslinking and/or a substantial risk of increasing the polydispersity of the copolymer after deprotection. It is well known indeed that most carboxyl protecting groups are too stable to regenerate the carboxyl group in the absence of a catalyst, even at elevated temperatures.

Very few attempts for a free radical copolymerization of protected (meth)acrylic acid monomers belonging to the class of alkoxyalkyl (meth)acrylates have been disclosed in the art. Nakane et al. in Journal of Polymer Science, Part A (1999) 37 : 609-614 teaches the preparation of random copolymers of butyl methacrylate and various alkoxyethyl methacrylates with a number average molecular weight of about 14,000 and a polydispersity index (PDI) of about 2.6 by classical radical copolymerization at 80 °C during 6.5 hours in the presence of 2,2'-azobis(isobutyronitrile).

ATRP is typically carried out under an inert atmosphere, at a temperature ranging from about 0°C to about 130°C (depending on the poly-merization initiator and the monomer), in the presence of a transition metal compound such as CuCI or CuBr, a ligand for solubilising said transition metal compound such as a bipyridine, and an initiator having a radically transferable atom such as an alkyl halide. ATRP was used to make methacrylate-containing block copolymers exhibiting low molecular weight distributions when a growing methacrylate block initiated an acrylic monomer, but not vice versa. ATRP may also be successfully used in the controlled water-based emulsion polymerization of methacrylic monomers. However, potential commercial drawbacks of ATRP are the long polymerization times and difficulties in removing the transition metal complex which can possibly remain in the polymer.

Coessens et al. in Prog. Polym. Sci. (2001) 26 : 342-349 confirm that acrylic acid or methacrylic acid are difficult to be directly polymerised by ATRP because of interactions of the carboxylic acid functionalities with the ATRP catalyst system. Therefore, precursors of poly(acrylic acid), e.g. poly(*tert*-butyl acrylate), were synthesized by ATRP, after which the carboxilic acid was deprotected yielding well-defined poly(acrylic acid). For instance, Davis et al. in Journal of Polymer Science, Part A (2000) 38 : 2278-2283 reports the making by ATRP of a triblock copolymer *tert*-butyl acrylate - styrene - *tert*-butyl acrylate with a number average molecular weight of about 23,900 and a polydispersity index (PDI) of 1.13, followed by hydrolysis under strong acidic conditions (concentrated hydrochloric acid in dioxane at reflux for 4 hours). Ashford et al. in Chem. Comm. (1999) 1285-1286 reports making by ATRP certain water-soluble poly(ethylene oxide-b-sodium methacrylate) block copolymers with number average molecular weights in the range of 1,300 to 7,300 and polydispersity index (PDI) in the range of 1.20 to 1.30.

International Patent Publication WO 00/40630 discloses reacting a poly(n-butylacrylate) having a number average molecular weight of 4,970 and a polydispersity index (PDI) of 1.26, with tert-butyl acrylate so as to form with about 100 % conversion a block copolymer (comprising about 72 % by weight n-butylacrylate and about 28 % by weight tert-butyl acrylate) with a number average molecular weight of 8,220 and a polydispersity index (PDI) of 1.34, followed by quantitative cleavage of the tert-butyl group by means of an excess of trifluoroacetic acid for 22 hours at room temperature, the resulting poly(n-butyl acrylate - b - acrylic acid) block copolymer having a number average molecular weight of 5,670 and a polydispersity index (PDI) of 1.22.

In Macromolecules (2002) 35:9875-9881, S. Lu et al. describe in a first step synthesizing a co(THPMA-co-fluorene-co-THPMA) triblock copolymer by atom transfer radical polymerisation in solution in *o*-dichlorobenzene, at 70°C under anhydrous conditions, in the presence of CuCl and 1,1,4,7,10,10-hexamethyl triethylene tetramine. Block copolymers with an average number molecular weight from about 14,000 to about 40,000 and a polydispersity index from 1.21 to 1.29 were obtained in this way. In a second step, selective decomposition of the THPMA masking groups was achieved by thermolysis under vacuum at 145°C for 5 hours, followed by dispersing the powdery resulting product into water and stirring at 40 °C overnight in order to completely recover the carboxylic acid functionality of the polymethacrylic acid segments due to the formation of anhydride during the heating period. This method of making polyfluorene-based block copolymers with a well-defined macromolecular architecture has the following disadvantages:
- THPMA is a monomer which is difficult to obtain with high purity, even after two vacuum distillations,
- the boiling point (86°C) of the protecting moiety (3,4-dihydro-2H-pyran) is much higher than that of other protecting moieties, therefore deprotection must occur at much higher temperatures,
- since anhydride formation cannot be avoided at such higher deprotection temperatures, an additional hydrolysis step is needed, thus a further drying step is again required before obtaining the final desired block copolymer.

Although polymers produced by anionic low temperature polymerization or by ATRP at high temperature both exhibit narrow molecular weight distributions (materialized by a low polydispersity index, PDI), they also differ substantially in several other aspects, especially with respect to stereochemistry, which may significantly impact their behavior and applications. The end product from anionic polymerization typically contains residual lithium counterions which are easily removed by precipitation, while the capping agent used in controlled free radical polymerization becomes incorporated into the product polymer until it is optionally converted into another functional group such as hydroxy or amino.

In view of the unsuccessful attempts of the prior art, as evidenced by the various publications discussed herein above, there is still a need in the art for efficiently making monodisperse or nearly monodisperse polymers and copolymers containing (α-substituted)acrylic acid segments within a wide range of molecular weights, without the environmental risks associated with corrosive and hazardous conditions, such as using strong acid catalysts, involved in the hydrolysis of protected acid monomers but while however satisfying the industrial demand for low production costs. There is also a need in the art for efficiently producing block copolymers containing (α-substituted)acrylic acid segments without facing a substantial risk of intramolecular crosslinking and/or polydispersity increase during the deprotection step of a protected acid monomer. There is also a need in the art for efficiently making monodisperse or nearly monodisperse polymers and copolymers containing (α-substituted)acrylic acid segments without a need for a protected acid monomer being difficult to obtain with high purity or requiring high temperature for thermolytic deprotection or wherein the protecting group is subject to substantial anhydride formation during a thermolysis step, thus complicating the recovery of the final desired polymer. There is also a need in the art for a protected acid monomer being easy to copolymerize with a wide variety of comonomers into well defined copolymer structures and being easy to quantitatively decompose by thermolysis whatever the kind and proportion of comonomers associated therewith in said copolymer structures. There is also a need in the art, in view of certain fields of application, to produce polymers showing a change in hydrophobicity or hydrophilicity depending upon the temperature to which they are submitted, e.g. in order to create contrasts onto a surface. All the above needs constitute the various goals to be achieved by the present invention, nevertheless other advantages of this invention will readily appear from the following description.

### SUMMARY OF THE INVENTION

The present invention is based on a number of unexpected findings. First, it was found a polymer segment according to claim 1
Second, it was found that said monomers are able to polymerize according to claim 4 into nearly monodisperse polymer segments end-capped with a halogen atom.

Fourth it was found that said alkoxyalkyl or alkylthioalkyl acrylates and said alkoxyalkyl or alkylthioalkyl α-substituted acrylates are able to copolymerize by controlled radical polymerisation techniques, such as ATRP, NMP and RAFT, with a great variety of comonomers into copolymers according to claim 18. These various embodiments of the invention are not suggested by the prior art but are however able to meet one or more of the needs recited herein above.

### BRIEF DESCRIPTION OF THE DRAWINGS

Figure 1 schematically shows a general method for making the alkoxyalkyl- or alkylthioalkyl acrylate monomers and α-substituted acrylate monomers used in certain embodiments of the invention.
Figure 2 schematically shows the thermogravimetric analysis of (a) a block copolymer of n-butyl acrylate and ethoxyethyl acrylate according to the invention and (b) a macro-initiator from which this block copolymer was made.
Figures 3A and 3B show the influence of reaction time onto the number average molecular weight and onto the polydispersity index of the reaction product of RAFT polymerization of ethoxyethyl acrylate at temperatures from 50 °C to 100 °C.
Figure 4 shows the number average molecular weights and polydispersity index of various block copolymers including a poly(ethoxyethyl acrylate) first block and a second block derived from an acrylic comonomer.

### DEFINITIONS

As used herein with respect to a substituting group, and unless otherwise stated, the term " alkyl " means straight and branched chain saturated acyclic hydrocarbon monovalent groups having from 1 to 4 carbon atoms such as, for example, methyl, ethyl, propyl, n-butyl, 1-methylethyl (isopropyl), 2-methylpropyl (isobutyl) and 1,1-dimethylethyl (ter-butyl);

As used herein with respect to a substituting group, and unless otherwise stated, the term " cycloalkyl " means a monocyclic saturated hydrocarbon monovalent group having a ring of 3 to 10 carbon atoms, such as for instance cyclopropyl, cyclobutyl, cyclopentyl, cyclohexyl, cycloheptyl, cyclooctyl and the like, said ring being optionally substituted with one or more C₁₋₄ alkyl radicals (such as, but not limited to, menthyl, i.e. 4-methyl-1-isopropylcyclohexyl), or a C₇₋₁₀ polycyclic saturated hydrocarbon monovalent radical having from 7 to 10 carbon atoms in two or more rings such as, but not limited to, norbornyl, fenchyl, trimethyltricycloheptyl or adamantyl.

As used herein with respect to a substituting group, and unless otherwise stated, the term " aryl " designates any mono- or polycyclic aromatic monovalent hydrocarbon group having from 6 to 30 carbon atoms such as, but not limited to, phenyl, naphthyl, anthracenyl, phenantracyl, fluoranthenyl, chrysenyl, pyrenyl, biphenylyl, terphenyl, picenyl, indenyl, biphenyl, indacenyl, benzocyclobutenyl, benzocyclooctenyl and the like, also including fused benzo-C₄₋₈ cycloalkyl groups (the latter being as defined above, but with 4 to 8 carbon atoms in the ring) such as, but not limited to, indanyl, tetrahydronaphtyl, fluorenyl and the like, all of the said aryl groups being optionally substituted with one or more substituents independently selected from the group consisting of halogen, amino, trifluoromethyl, hydroxyl, sulfhydryl and nitro, such as but not limited to 4-fluorophenyl, 4-chlorophenyl, 3,4-dichlorophenyl, 4-cyanophenyl, 2,6-dichlorophenyl, 2-fluorophenyl, 3-chlorophenyl, 3,5-dichlorophenyl and the like.

As used herein with respect to a substituting group, and unless otherwise stated, the terms " alkoxy ", " cycloalkoxy ", " aryloxy ", " thioaryl " and " thioalkyl " refer to substituents wherein a carbon atom of an alkyl group (preferably a C₁₋₄ alkyl group), a cycloalkyl group (preferably a C₃₋₁₀ cycloalkyl group) or an aryl group (each of them such as defined herein above), is attached to an oxygen atom or a divalent sulfur atom through a single bond such as, but not limited to, methoxy, ethoxy, propoxy, n-butoxy, isopropoxy, sec-butoxy, tert-butoxy, cyclopropyloxy, cyclobutyloxy, cyclopentyloxy, cyclohexyloxy, menthoxy, thiomethyl, thioethyl, thiopropyl, thiobutyl, phenoxy and the like.

As used herein, and unless stated otherwise, the terms " alkenyl " and "cycloalkenyl " refer to linear or branched hydrocarbon chains having from 2 to 10 carbon atoms, respectively cyclic hydrocarbon chains having from 3 to 10 carbon atoms, with at least one ethylenic unsaturation (i.e. a carbon-carbon sp2 double bond) which may be in the cis or trans configuration such as, but not limited to, vinyl (-CH=CH₂), allyl (-CH₂CH=CH₂), cyclopentenyl, cyclohexenyl and 5-hexenyl (-CH₂ CH₂CH₂CH₂CH=CH₂).

As used herein, and unless stated otherwise, the terms " alkynyl " and "cycloalkynyl " refer to linear or branched hydrocarbon chains having from 2 to 10 carbon atoms, respectively cyclic hydrocarbon chains having from 3 to 10 carbon atoms, with at least one acetylenic unsaturation (i.e. a carbon-carbon sp triple bond) such as, but are not limited to, ethynyl (-C≡CH), propargyl (-CH₂C≡CH), cyclopropynyl, cyclobutynyl, cyclopentynyl, or cyclohexynyl.

As used herein with respect to a substituting group, and unless otherwise stated, the term " arylalkyl " refers to an aliphatic saturated hydrocarbon monovalent group (preferably a C₁₋₄ alkyl such as defined above) onto which an aryl group (such as defined herein) is already bonded, and wherein the said aliphatic group and/or the said aryl group may be optionally substituted with one or more substituents independently selected from the group consisting of halogen, amino, hydroxyl, sulfhydryl, alkyl, trifluoromethyl and nitro, such as but not limited to benzyl, 4-chlorobenzyl, 4-fluorobenzyl, 2-fluorobenzyl, 3,4-dichlorobenzyl, 2,6-dichlorobenzyl, 3-methylbenzyl, 4-methylbenzyl, 4-ter-butylbenzyl, phenylpropyl, 1-naphthylmethyl, phenylethyl, 1-amino-2-phenylethyl, 1-amino-2-[4-hydroxy-phenyl]ethyl, and styryl.

As used herein with respect to a substituting group, and unless otherwise stated, the term " heterocyclic " means a mono- or polycyclic, saturated or mono-unsaturated or polyunsaturated monovalent hydrocarbon group having from 3 up to 15 carbon atoms and including one or more heteroatoms in one or more heterocyclic rings, each of said rings having from 3 to 10 atoms (and optionally further including one or more heteroatoms attached to one or more carbon atoms of said ring, for instance in the form of a carbonyl or thiocarbonyl or selenocarbonyl group, and/or to one or more heteroatoms of said ring, for instance in the form of a sulfone, sulfoxide, N-oxide, phosphate, phosphonate or selenium oxide group), each of said heteroatoms being independently selected from the group consisting of nitrogen, oxygen, sulfur, selenium and phosphorus, also including radicals wherein a heterocyclic ring is fused to one or more aromatic hydrocarbon rings for instance in the form of benzo-fused, dibenzo-fused and naphto-fused heterocyclic radicals; within this definition are included heterocyclic groups such as, but not limited to, pyridyl, dihydropyridyl, tetrahydropyridyl (piperidyl), thiazolyl, tetrahydrothienyl, tetrahydrothienyl sulfoxide, furanyl, thienyl, pyrrolyl, pyrazolyl, imidazolyl, tetrazolyl, benzofuranyl, thianaphthalenyl, indolyl, indolenyl, quinolinyl, isoquinolinyl, benzimidazolyl, piperidinyl, 4-piperidonyl, pyrrolidinyl, 2-pyrrolidonyl, pyrrolinyl, tetrahydrofuranyl, bis-tetrahydrofuranyl, tetrahydropyranyl, bis-tetrahydropyranyl, tetrahydroquino-linyl, tetrahydroisoquinolinyl, decahydroquinolinyl, octahydroisoquinolinyl, azocinyl, triazinyl, 6H-1,2,5-thiadiazinyl, 2H,6H-1,5,2-dithiazinyl, thianthrenyl, pyranyl, isobenzofuranyl, chromenyl, xanthenyl, phenoxathinyl, 2H-pyrrolyl, isothiazolyl, isoxazolyl, pyrazinyl, pyridazinyl, indolizinyl, isoindolyl, 3H-indolyl, 1H-indazoly, purinyl, 4H-quinolizinyl, phthalazinyl, naphthyridinyl, quinoxalinyl, quinazolinyl, cinnolinyl, pteridinyl, 4H-carbazolyl, carbazolyl, ß-carbolinyl, phenanthridinyl, acridinyl, pyrimidinyl, phenanthrolinyl, phenazinyl, phenothiazinyl, furazanyl, phenoxazinyl, isochromanyl, chromanyl, imidazolidinyl, imidazolinyl, pyrazolidinyl, pyrazolinyl, piperazinyl, indolinyl, isoindolinyl, quinuclidinyl, morpholinyl, oxazolidinyl, benzotriazolyl, benz-isoxazolyl, oxindolyl, benzoxazolinyl, benzothienyl, benzothiazolyl and isatinoyl; heterocyclic groups may be sub-divided into heteroaromatic (hetero-aryl) groups such as, but not limited to, pyridyl, dihydropyridyl, pyridazinyl, pyrimidinyl, pyrazinyl, s-triazinyl, oxazolyl, imidazolyl, thiazolyl, isoxazolyl, pyrazolyl, isothiazolyl, furanyl, thiofuranyl, thienyl, and pyrrolyl, and non-aromatic heterocyclic groups; when a heteroatom of the said non-aromatic heterocyclic group is nitrogen, the latter may be substituted with a substituent selected from the group consisting of alkyl, cycloalkyl, aryl, arylalkyl and alkylaryl (such as defined herein).

The term " acyl " as used herein, unless otherwise stated, refers to a carbonyl group directly attached to an alkyl, alkenyl, alkynyl, aryl, heterocyclic or arylalkyl group (such as defined hereinbefore), such as for example alkanoyl (alkylcarbonyl), aroyl (arylcarbonyl), arylalkanoyl or alkylaroyl groups, wherein the carbonyl group is coupled to another molecule.

As used herein with respect to a substituting atom, and unless otherwise stated, the term " halogen " means any atom selected from the group consisting of fluoro, chloro, bromo and iodo.

As used herein, the term " polydispersity index " refers to the ratio of the weight average molecular weight to the number average molecular weight of a polymer or polymer segment.

### DETAILED DESCRIPTION OF THE INVENTION

In a first embodiment, the present invention provides a polymer segment according to claim 1 and said polymer segment having one or more of the following characteristics:
- a degree of polymerisation of at least 5, preferably at least 8, more preferably at least 15;
- a degree of polymerisation of at most about 300, preferably at most about 200, more preferably at most about 150, for example at most 100;
- a number average molecular weight of at least 600, preferably at least about 1,200, more preferably at least about 2,500, most preferably at least about 5,000;
- a number average molecular weight of at most 50,000, preferably at most about 30,000, more preferably at least about 20,000, for example at most about 15,000;
- a polydispersity index (PDI) ranging from 1.05 to 1.30, more preferably a PDI from 1.05 to about 1.20, most preferably a PDI from 1.05 to about 1.15.

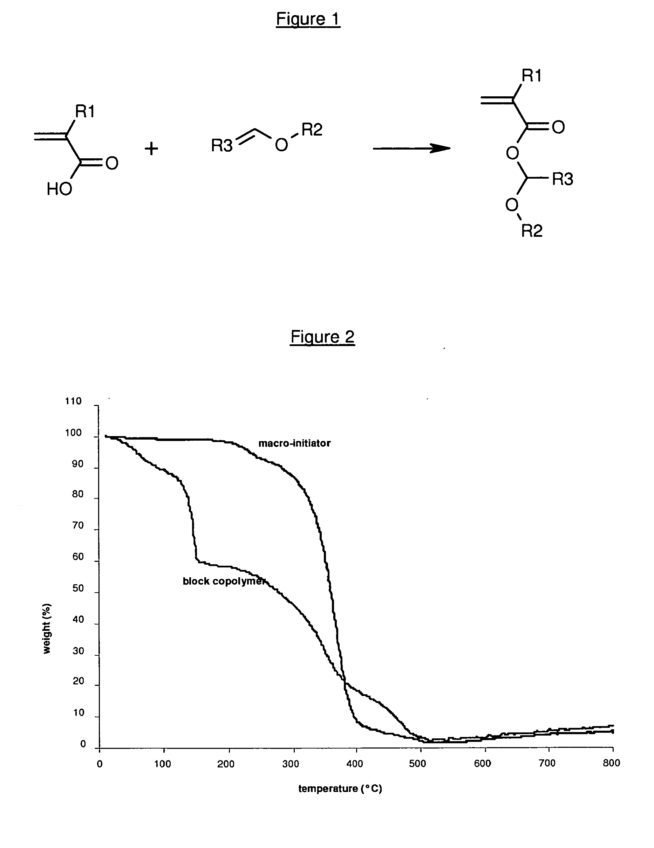

Such monomers are known in the art or can readily be prepared by reacting acrylic acid or methacrylic acid with a vinyl ether, a 1-propenyl ether, a vinyl thioether or a 1-propenyl thioether under conditions already known in the art for some members of this family or from the corresponding acrylates. This reaction is schematically shown for ethers in figure 1 with R₁ being methyl, R₂ being C₁₋₄ alkyl, and R₃ being hydrogen or C₁₋₄ alkyl, or wherein R₂ together with R₃ may form a cyclic structure. The corresponding reaction for thioethers (not shown in figure 1) proceeds similarly.

In this first embodiment of the present invention, the polymer segment is end-capped with a terminal group or atom. The latter depends upon the polymerisation method used for making the nearly monodisperse polymer segment, as explained herein after. Preferably the end-capping terminal group or atom is halogen atom, more preferably bromo or chloro, when said polymerisation method is ATRP. The end-capping terminal group or atom is usually a nitroxide group when said polymerisation method is NMP. Preferably the end-capping terminal group or atom is a xanthate group when said polymerisation method is MADIX. Preferably the end-capping terminal group or atom is a thiocarbonylthio group when said polymerisation method is RAFT. Details of the relevant xanthate and thiocarbonylthio groups will readily appear from the following description of the initiation systems used in MADIX method and RAFT method, respectively.

In a second embodiment, the present invention provides various methods for making a nearly monodisperse polymer segment according to claim 1. These methods have in common that they comprise polymerizing a polymerizable monomer into a polymer segment in the presence of a free-radical initiation system which is capable of providing control of the polymer polydispersity in such a way that the PDI of the polymer segment is not above 1.30. At least four methods having the aforesaid common feature are available at the moment, but the skilled person understands that any method other than these four methods is also within the framework of the present invention as soon as it is able to afford the desired PDI characteristic.

A first polymerization method that may be used in this second embodiment of the present invention is as defined in claim 4. In particular this method can be applied at moderate temperatures ranging from 20 °C to about 55 °C while keeping a reasonable polymerisation rate for most of the alkoxyalkyl acrylates, alkylthioalkyl acrylates, alkoxyalkyl α-substituted acrylates and alkylthioalkyl α-substituted acrylates which are relevant to the present invention.

Suitable initiators for this ATRP method include, but are not limited to, those having the general formula R₁₁R₁₂R₁₃CX wherein:
- X is halogen, preferably chloro or bromo; and
- R₁₁, R₁₂ and R₁₃ are each independently selected from the group consisting of hydrogen, halogen, C₁₋₄ alkyl (wherein one or more hydrogen atoms are optionally replaced with halogen), C₃₋₁₀ cycloalkyl, hydroxyl, cyano, vinyl, oxiranyl, glycidyl, aryl (wherein said aryl is optionally substituted with one or more substituents independently selected from the group consisting of C₁₋₄ alkyl and/or halogen) and the like; such that no more than two, preferably no more than one, of R₁₁, R₁₂ and R₁₃ is (are) hydrogen.

Illustrative examples of such suitable ATRP initiators include, but are not limited to, 1-phenylethyl chloride, 1-phenylethyl bromide, chloroform, carbon tetrachloride, 2-chloropropionitrile, 2-chloropropionic acid, 2-bromopropionic acid, 2-chloro-isobutyric acid, 2-bromoisobutyric acid, methyl 2-chloro-propionate, ethyl 2-chloropropionate, methyl 2-bromopropionate, ethyl 2-bromoisobutyrate, α,α'-dichloroxylene, 2,2-bis(halomethyl)-1,3-dihalopropanes (e.g. 2,2-bis(chloromethyl)-1,3-dichloropropane and 2,2-bis(bromo-methyl)-1,3-dibromopropane), α,α'-dibromoxylene, hexakis(α-chloromethyl)benzene and hexakis(α-bromomethyl)benzene.

Any transition metal compound being able to participate in a redox cycle with the above ATRP initiator but does not form a direct carbon-metal bond with the polymer chain, such as copper monochloride, copper monobromide, zinc dichloride and zinc dibromide, is a suitable transition metal compound for use in this ATRP method of the second embodiment of the present invention.

The molar proportion of the transition metal compound with respect to the initiator to be used in this ATRP method of the present invention depends on the reactivity of the metal-ligand complex but is preferably from about 0.01:1 to about 10:1, more preferably from about 0.5:1 to about 5:1. Similarly, the molar proportion of the ligand with respect to the transition metal compound may depend upon the number of coordination sites on the transition metal compound which the selected ligand will occupy but may be easily determined by the skilled person while making use of the general knowledge in the ATRP method. For instance the molar proportion of the ligand with respect to the transition metal compound may be from 1:1 to 2:1, or the molar proportion of the ligand with respect to the initiator may be from about 0.5:1 to about 10:1

The ATRP polymerization method of the invention may be effected in the absence or in the presence of a solvent system. Suitable solvents include, but are not limited to, linear ethers, cyclic ethers, alkanes, cycloalkanes, aromatic hydrocarbons, halogenated hydrocarbons, acetonitrile, dimethylformamide, and mixtures thereof, and supercritical solvents such as CO₂.

A second polymerization method that may be used in this second embodiment of the present invention includes the general features of the so-called MADIX method, i.e. the presence of at least one source of free radicals, and at least one compound (I) bearing a xanthate functionality and having the general formula:

R²-[O-C(=S)-S-R¹]ₚ (I)

wherein
- R² is a group selected from the group consisting of alkyl, acyl, aryl, alkenyl, alkynyl, cycloalkyl, cycloalkenyl, cycloalkynyl and heterocyclic, said group being substituted by one or more halogen atom(s), said halogen atom(s) being independently selected from the group consisting of fluoro, chloro and bromo,
- R¹ is a group selected from the group consisting of alkyl, acyl, aryl, alkenyl, alkynyl, cycloalkyl, cycloalkenyl, cycloalkynyl and heterocyclic, said group being optionally substituted by one or more substituents independently selected from the group consisting of aryl, alkoxycarbonyl, aryloxycarbonyl, carboxyl, thiocarboxyl, acyloxy, carbamoyl, cyano, alkylcarbonyl, alkyl-arylcarbonyl, arylcarbonyl, arylalkylcarbonyl, phthalimido, maleimido, succinimido, amidino, guanidino, hydroxyl, sulfhydryl, amino, halogen, allyl, epoxy, alkoxy, cycloalkoxy, aryloxy, thioalkyl, thioaryl, alkali metal carboxylate, alkali metal sulfonate and quaternary ammonium salt; and
- p is an integer from 1 to 10.

Suitable examples of compounds (I) bearing a xanthate functionality to be used in this MADIX method of the present invention include, but are not limited to, ethyl α-(O-heptafluorobutylxanthyl)propionate, ethyl α-(O-trifluoroethylxanthyl)propionate, ethyl α-(O-tridecafluorooctylxanthyl) propionate and bis(bromo-substituted xanthyl)propionates.

If thermal initiation is not sufficient to generate free radicals, depending upon the selected polymerisation temperature, the initiation system used in this MADIX method of the present invention may include, in addition to the compound (I) having xanthate functionality, one or more free-radical initiators. Suitable free-radical initiators should be able of at least partial decomposition at the selected polymerisation temperature and may be selected from the following:
- organic peroxides, hydroperoxides, peresters and percarbonates such as, but not limited to, *tert*-butyl hydroperoxide, *tert*-amyl hydroperoxide, di-*tert*-butyl peroxide, cumyl hydroperoxide, *tert*-butylperoxy acetate, *tert*-butylperoxy benzoate, *tert-*butylperoxy octoate, *tert*-butylperoxy neodecanoate, *tert*-butylperoxy isobutyrate, lauroyl peroxide, *tert*-amyl-peroxy pivalate, *tert*-butylperoxy pivalate, di-isopropyl peroxydicarbonate, dicyclohexyl peroxydicarbonate, methylethylketone peroxide, dicumyl peroxide, dilauryl peroxide and benzoyl peroxide;
- inorganic persulfates such as, but not limited to, potassium persulfate or ammonium persulfate;
- azo compounds such as, but not limited to, 2-2'-azobis(isobutyronitrile), 2,2'-azobis(2-butanenitrile), 4,4'-azobis(4-pentanoic acid), 1,1'-azobis (cyclohexane-carbonitrile), 2-(*tert*-butylazo)-2-cyanopropane, 2,2'-azobis[2-methyl-N-(1,1)-bis(hydroxymethyl)-2-hydroxyethyl]propionamide, 2,2'-azo-bis[2-methyl-N-hydroxyethyl]propionamide, 2,2'-azobis(N,N'-dimethylene-isobutyramidine) dichloride, 2,2'-azobis(2-amidinopropane) dichloride, 2,2'-azobis(N,N'-dimethyleneisobutyramide), 2,2'-azobis(2-methyl-N-[1,1-bis (hydroxymethyl)-2-hydroxyethyl]propionamide, 2,2'-azobis(2-methy)-N-[1,1-bis(hydroxymethyl) ethyl]propionamide), 2,2'-azobis[2-methyl-N-(2-hydroxy-ethyl)propionamide)] and 2,2'-azobis(isobutyramide) dihydrate;
- redox systems including combinations of one or more compounds selected from the group consisting of hydrogen peroxide, alkyl peroxides, iron salts, titanium salts, zinc formaldehyde-sulfoxylate, sodium formaldehyde-sulfoxylate, alkali metal or ammonium persulfates, alkali metal or ammonium perborates, alkali metal or ammonium perchlorates, alkali metal bisulfites, arylphosphinic acids, ascorbic acid and the like.

The MADIX polymerization method of the invention may be effected in the absence or in the presence of a solvent system. Suitable solvents include, but are not limited to, linear ethers, cyclic ethers, alkanes, cycloalkanes, aromatic hydrocarbons, halogenated hydrocarbons, acetonitrile, dimethylformamide, and mixtures thereof, and supercritical solvents such as CO₂.

A third polymerization method that may be used in this second embodiment of the present invention includes the general features of the so-called NMP method, i.e. the presence of at least a N-oxyl radical. Although an oxo nitroxide stable free radical agent such as 4-oxo-2,2,6,6-tetramethyl-1-piperidinyloxy (ususally referred as 4-oxo-TEMPO) may be used for this purpose, it is less preferred since, as taught by U.S. Patent No. 5,412,047 for alkyl acrylates, it requires high polymerisation temperatures and/or long polymerisation times (e.g. 3.5 hours at 165 °C) and is limited to the production of polyacrylates with a PDI which is still too high (from 1.36 to 1.72) for most applications. Preferred N-oxyl radicals belong to one of the following families:
- stable free β-substituted nitroxide radicals of the kind disclosed in U.S. Patent No. 6,255,448, such as, but not limited to, *tert*-butyl 1-phenyl-2-methylpropyl nitroxide, *tert*-butyl 1-(2-naphthyl)-2-methylpropyl nitroxide, *tert*-butyl 1-diethylphosphono-2,2-dimethylpropyl nitroxide, *tert*-butyl 1-dibenzyl-phosphono-2,2-dimethylpropyl nitroxide, phenyl 1-diethyl-phosphono-2,2-dimethylpropyl nitroxide, phenyl 1-diethylphosphono-1-methylethyl nitroxide and 1-phenyl-2-methylpropyl 1-diethylphosphono-1-methylethyl nitroxide; and
- N-oxyl radicals of the kind disclosed in U.S. Patent No. 6,639,033, in particular those comprising a spiro ring system such as, but not limited to, 8,8-dimethyl-10-oxa-7-aza-spiro[5.5]undecan-7-oxyl and 7,7-dimethyl-9-oxa-6-aza-spiro[4.5] decan-6-oxyl, and 2,2,6,6-tetramethyl-1-aza-4-thia-cyclohexane-1,4,4-trioxide.

Each of the above listed N-oxyl radicals is preferably used in a proportion of about 0.005 % to about 5 % by weight of the polymerizable monomer, with the specific advantage that it can be efficiently performed within a broad range of polymerisation temperatures from about 50 °C to about 180 °C, preferably from about 90 °C to about 130 °C while keeping a reasonable polymerisation rate for most of the alkoxyalkyl acrylates, alkylthioalkyl acrylates, alkoxyalkyl α-substituted acrylates and alkylthioalkyl α-substituted acrylates which are relevant to the present invention.

If thermal initiation is not sufficient to generate free radicals, depending upon the selected polymerisation temperature, the initiation system used in this NMP method of the present invention may include, in addition to the N-oxyl radical, one or more free-radical initiators which may be selected from the following:
- organic peroxides, hydroperoxides, peresters and percarbonates,
- azo compounds,
- inorganic persulfates, and
- redox systems,
all being as alredy described hereinabove.

The initiation system used in this NMP method of the present invention may also include, in addition to the N-oxyl radical, one or more free-radicals of the type described in U.S. Patent No. 6,380,315, preferably thiatriazolyl radicals, dithiadiazolyl radicals or 2,5-dihydro-1H-1,2,4-triazol-2-yl radicals.

The NMP polymerization method of the invention may be effected in the absence or in the presence of a solvent system. Suitable solvents include, but are not limited to, linear ethers, cyclic ethers, alkanes, cycloalkanes, aromatic hydrocarbons, halogenated hydrocarbons, acetonitrile, dimethylformamide, and mixtures thereof, and supercritical solvents such as CO₂. It may also be effected as an aqueous emulsion polymerisation method, e.g. according to the teaching of U.S. Patent No. 6,503,983, and optionally at pressures above the vapor pressure of the polymerization mixture, e.g. according to the teaching of U.S. Patent No. 6,696,533.

A fourth polymerization method that may be used in this second embodiment of the present invention includes the general features of the so-called RAFT method, i.e. the presence of at least a source of free radicals and at least a sulfur-based chain transfer agent (the latter being also referred hereinafter as a RAFT agent) having a transfer constant in the range of from 0.1 to 5,000. Said sulfur-based chain transfer agent may be for instance as described in U.S. Patent No. 6,642,318, in particular one of the following:
- vinylogous dithioesters such as, but not limited to, benzyl 3,3-di(benzylthio)prop-2-enedithioate, 3-benzylthio-5,5-dimethylcyclohex-2-ene-1-thione and the like,
- thiocarbonylthio compounds with a-nitrogen atoms, e.g. benzyl 1-pyrrole-carbodithioate, benzyl 1-(2-pyrrolidinone)carbodithioate, 2-cyano-but-2-yl 1-pyrrolecarbodithioate, 2-cyanoprop-2-yl 1-pyrrolecarbodithioate and the like,
- benzyl (1,2-benzenedicarboximido)carbodithioate,
- dithiocarbamates such as, but not limited to, N,N-dimethyl-S-(2-cyanoprop-2-yl)dithiocarbamate, N,N-diethyl S-benzyl dithiocarbamate,
- N,N-diethyl S-(2-ethoxycarbonylprop-2-yl)dithiocarbamate,
- thiocarbonylthio compounds with an α-oxygen substituent (xanthate esters) such as, but not limited to, O-ethyl S-(1-phenylethyl)xanthate, O-ethyl S-(2-(ethoxycarbonyl)prop-2-yl)xanthate, O-ethyl S-(2-cyanoprop-2-yl)xanthate, O-ethyl S-(2-cyanoprop-2-yl)xanthate, O-ethyl S-cyanomethyl xanthate, O-phenyl S-benzyl xanthate, O-pentafluorophenyl S-benzyl xanthate,
- bis(thiocarbonyl) disulfides,
- 2-cyano-2-butyldithiobenzoate, and
- benzyl 1-imidazolecarbodithioate.

The RAFT method of this second embodiment of the present invention has the specific advantage that it can be efficiently performed within a broad range of polymerisation temperatures from about 40 °C to about 110 °C, preferably from about 60 °C to about 95 °C while keeping a reasonable polymerisation rate for most of the alkoxyalkyl acrylates, alkylthioalkyl acrylates, alkoxyalkyl α-substituted acrylates and alkylthioalkyl α-substituted acrylates which are relevant to the present invention.

If thermal initiation is not sufficient to generate free radicals, depending upon the selected polymerisation temperature, the initiation system used in this RAFT method of the present invention may include, in addition to the sulfur-based chain transfer (RAFT) agent, one or more free-radical initiators which may be selected from the following:
- organic peroxides, hydroperoxides, peresters and percarbonates,
- azo compounds such as, but not limited to, azobis isobutyronitrile,
- inorganic persulfates, and
- redox systems,
all being as already described hereinabove. In this situation, the molar ratio between the RAFT agent and the free-radical initiator(s) is preferably from about 1:1 to about 20:1, depending upon parameters such as, but not limited to, the monomer to be polymerised, the polymerisation temperature, and the like.

The RAFT polymerization method of the invention may be effected in the absence or in the presence of a solvent system. Suitable solvents include, but are not limited to, linear ethers, cyclic ethers, alkanes, cycloalkanes, aromatic hydrocarbons, halogenated hydrocarbons, acetonitrile, dimethylformamide, and mixtures thereof, and supercritical solvents such as CO₂.

In each of the methods according to the second embodiment of the present invention, polymerization is preferably continued until the number average molecular weight of the nearly monodisperse polymer segment ranges from about 600 to about 50,000, preferably from about 1,200 to about 30,000, more preferably from about 2,500 to about 20,000, i.e. polymerization is preferably continued for a period of time ranging from about 0.5 hour to about 15 hours, preferably from about 1 hour to about 5 hours, depending upon the selected polymerization temperature. Preferably, when the method according to the second embodiment of the present invention is an ATRP method carried out in the presence of an initiator having a radically transferable atom, the molar ratio of the monomer to be polymerised to said initiator ranges from about 30 to about 300, more preferably from about 50 to about 200, most preferably from about 80 to about 200. Preferably, when the method according to the second embodiment of the present invention is a MADIX method carried out in the presence of a compound having a xanthate functionnality, the molar ratio of the monomer to be polymerised to said compound ranges from about 50 to about 200, more preferably from about 70 to about 150, most preferably about 100. Preferably, when the method according to the second embodiment of the present invention is a RAFT method carried out in the presence of a sulfur-based chain transfer agent (a RAFT agent), the molar ratio of the monomer to be polymerised to said sulfur-based chain transfer (RAFT) agent ranges from about 20 to about 2,000, preferably from about 250 to about 1,500.

In a particular aspect of the ATRP method according to the second embodiment of the present invention, when the transition metal compound is such as, but not limited to, copper monochloride or copper monobromide, the resulting nearly monodisperse polymer segment is atactic.

In another, the present invention provides a copolymer having an average polydispersity index (PDI) ranging from 1.05 to 1.30, comprising a polymer segment such as defined in the first embodiment herein above, and further comprising repeating units of one or more polymerizable comonomer(s) having one or more olefinic double bond(s). Said comonomer(s) having one or more olefinic double bond(s) should preferably be polymerizable at a reasonable rate by a living or controlled radical polymerization process such as, but not limited to, a ATRP method, a MADIX method, a RAFT method or a NMP method, all of the latter such as detailed herein above. Alternatively, when a certain comonomer is not polymerizable at a reasonable rate by a controlled radical polymerization process such as ATRP, MADIX, RAFT or NMP, but is more easily polymerizable by a non-radical controlled polymerization process such as, but not limited to, cationic or anionic polymerisation, a nearly mono-disperse block copolymer according to this fifth embodiment of the present invention may also be produced by firest making a nearly monodisperse segment of the said comonomer by means of said non-radical controlled polymerization process and then polymerising, in the presence of said first obtained nearly monodisperse segment, an alkoxyalkyl or alkylthioalkyl acrylate or an alkoxyalkyl or alkylthioalkyl α-substituted acrylate such as referred hereinabove by a controlled radical polymerization process such as, but not limited to, ATRP, MADIX, RAFT or NMP. In view of these alternative polymerisation possibilities, the choice of the comonomer(s) having one or more olefinic double bond(s) is not particularly restricted, as evidenced in details hereinafter.

In order to provide specific usefulness to the copolymer according to this embodiment of the present invention, said comonomer(s) having one or more olefinic double bond(s) should preferably be selected to differ in polarity from the alkoxyalkyl or alkylthioalkyl acrylate(s) or α-substituted acrylate(s) with which copolymerisation will take place and/or to differ in polarity from the acrylic acid or α-substituted acrylic acid or anhydride that may result from later thermolysis of said alkoxyalkyl or alkylthioalkyl acrylate(s) or α-substituted acrylate(s). For instance said comonomer(s) having one or more olefinic double bond(s) are preferably selected to provide amphiphilicity to the resulting copolymer.

Examples of comonomer(s) suitable for incorporation into the copolymer according to this embodiment of the invention include, but are not limited to, the following:
- acrylic or C₁₋₄ alkylacrylic acid mono- or -di-C₁₋₄ alkylamino-C₂₋₄ alkyl esters and salts thereof,
- acrylic or C₁₋₄ alkylacrylic acid hydroxy-C₂₋₄ alkyl esters,
- acrylic or C₁₋₄ alkylacrylic acid (C₁₋₄ alkyl)₃silyloxy-C₂₋₄alkyl esters,
- acrylic or C₁₋₄ alkylacrylic acid (C₁₋₄alkyl)₃silyl-C₂₋₄alkyl esters,
- acrylic or C₁₋₄alkylacrylic acid heterocyclyl-C₂₋₄alkyl esters and salts thereof,
- C₁₋₂₄ alkoxylated poly C₂₋₄alkylene glycol acrylic or C₁₋₄ alkylacrylic acid esters,
- acrylamides or C₁₋₄ alkylacrylamides,
- acrylic or C₁₋₄ alkylacrylic mono- or -di-C₁₋₄ alkylamides,
- acrylic or C₁₋₄ alkylacrylic di-C₁₋₄ alkylamino C₁₋₄ alkylamides and salts thereof,
- acrylic or C₁₋₄ alkylacrylic amino-C₂₋₄ alkylamides,
- acrylonitrile, methacrylonitrile,
- acrylic or C₁₋₄ alkylacrylic acids or anhydrides,
- diolefins such as, but not limited to, butadiene,
- 4-aminostyrene and salts thereof,
- di-C₁₋₄ alkylaminostyrene and salts thereof,
- vinyl substituted heterocycles,
- fluorenes,
- optionally substituted styrenesulfonic acid and salts thereof, and
- vinylformamide.
Specific examples of suitable acrylic or C₁₋₄ alkylacrylic acid mono- or -di-C₁₋₄ alkylamino-C₂₋₄ alkyl esters include, but are not limited to, acrylic or methacrylic acid 2-monomethylaminoethylester, acrylic or methacrylic acid 2-dimethylaminoethylester, acrylic or methacrylic acid 2-monoethylaminoethyl or 2-diethylaminoethyl esters, acrylic or methacrylic acid 2-tert-butylamino-ethylester as well as the corresponding salts of these amino substituted (meth)acrylates. Specific examples of suitable acrylic or C₁₋₄ alkylacrylic acid hydroxy-C₂₋₄ alkyl esters include, but are not limited to, acrylic or methacrylic acid 2-hydroxyethylester (hereinafter referred as HEA and HEMA respectively), and acrylic or methacrylic acid 2-hydroxypropylester.

Specific examples of suitable acrylic or C₁₋₄ alkylacrylic acid heterocyclyl-C₂-₄alkyl esters include, but are not limited to, acrylic or methacrylic acid-2-(N-morpholinyl)-ethyl ester, acrylic or methacrylic acid 2-(2-pyridyl) ethyl ester, acrylic or methacrylic acid 2-(1-imidazolyl)ethyl ester, acrylic or methacrylic acid 2-(2-oxo-1-pyrrolidinyl)ethyl ester, acrylic or methacrylic acid 2-(4-methylpiperidin-1-yl)ethyl ester, and acrylic or methacrylic acid 2-(2-oxo-imidazolidin-1-yl)-ethyl ester.

Specific examples of suitable acrylic or C₁₋₄ alkylacrylic acid (C₁₋₄ alkyl)₃silyloxy-C₂₋₄alkyl esters include, but are not limited to, acrylic or methacrylic acid 2-trimethylsilyloxyethyl-HEA.

Specific examples of suitable acrylic or C₁₋₄ alkylacrylic acid (C₁₋₄ alkyl)₃silyl-C₂₋₄alkyl esters include, but are not limited to, acrylic or methacrylic acid 2-trimethylsilylethylester, and acrylic or methacrylic acid 3-trimethylsilyl-n-propylester.

Specific examples of suitable acrylamides or C₁₋₄ alkylacrylamides, acrylic or C₁₋₄ alkylacrylic mono- or -di-C₁₋₄ alkylamides, acrylic or C₁₋₄ alkylacrylic di-C₁₋₄ alkylamino C₁₋₄ alkylamides, and acrylic or C₁₋₄ alkylacrylic amino-C₂₋₄ alkylamides include, but are not limited to, acrylamide, methacryl-amide, N,N-dimethylacrylamide, N,N-dimethyl(meth)acrylamide, 2-(N,N-dimethylaminoethyl)-acrylamide, 2-(N,N-dimethylaminoethyl)-methacrylamide, 2-(N,N-dimethylaminopropyl)-methacrylamide, 2-aminoethylacrylamide and 2-aminoethylmethacrylamide.

Examples of suitable vinyl substituted heterocycles include, but are not limited to, vinylpyrrolidone, vinylimidazole, vinylcarbazole and vinylpyridine.

Examples of suitable di-C₁₋₄ alkylaminostyrene include, but are not limited to, 4-N,N-dimethylaminostyrene.

Other suitable polymerizable comonomer(s) having one or more olefinic double bond(s) include acrylic or C₁₋₄ alkylacrylic acid C₁₋₄alkyl esters such as, but not limited to, methyl acrylate, methyl methacrylate, ethyl acrylate, ethyl methacrylate, isopropyl acrylate, isopropyl methacrylate, n-propyl acrylate, n-propyl methacrylate, isobutyl acrylate, isobutyl methacrylate, n-butyl acrylate, n-butyl methacrylate, ter-butyl acrylate and ter-butyl methacrylate. Other suitable polymerizable comonomer(s) having one or more olefinic double bond(s) also include styrene and substituted styrenes, maleic anhydride, maleic diimides, and C₁₋₄alkyl diesters of maleic or fumaric acid.

Comonomers suitable for building a block copolymer according to this embodiment of the present invention also include monomers polymerizable by non-radical controlled polymerisation techniques such as cationic polymerization. Representative examples of such comonomers include vinyl ethers, for instance methyl vinyl ether, and 1-propenyl ethers.

Any combination of one or more polymerizable comonomer(s) having one or more olefinic double bond(s) such as above defined may be used in the embodiment of the present invention, provided that the method of copolymer preparation is tailored to match the type (radical, anionic or cationic) of living polymerization process applicable to the comonomer(s) of concern. The selection of a suitable comonomer or a suitable combination of comonomers for the practice of the fifth embodiment of the present invention will mainly be dictated by the balance of properties that is desired in the resulting copolymer, before or after a thermolytic treatment as provided herein, for the relevant end-user application.

Copolymers according to this embodiment of the present invention preferably have an average polydispersity index (PDI) ranging from 1.05 to about 1.20, most preferably a PDI from 1.05 to about 1.15. In fact the skilled person understands that, either due to the difference(s) in polarity or chemical functionality between the monomers, or due to the different types of polymerisation methods used (in particular the difference between radical and non-radical polymerisation methods), the copolymers according to this embodiment of the present invention may exhibit a first, preferably low, PDI for the segment of repeating units of the one or more alkoxyalkyl or alkylthioalkyl acrylate(s) or the one or more alkoxyalkyl or alkylthioalkyl α-substituted acrylate(s), and a second PDI for the segment of repeating units derived from the one or more polymerizable comonomer(s) having one or more olefinic double bond(s). The first PDI and the second PDI may be different (the second PDI may be lower or higher than the first PDI) as long as the average PDI of the copolymer according to the fifth embodiment of the present invention remains within, or close to, the preferred PDI range specified herein above.

Copolymers according to this embodiment of the present invention may be classified into different categories. A first category consists of copolymers being essentially random copolymers, i.e. being as close to statistically random as is possible under radical polymerization conditions. Such a random copolymer may be produced only when a single radical controlled polymerisation technique is used and the two or more comonomers are submitted to polymerisation conditions at the same time. Such a random copolymer can also serve as a block in any of the block copolymers detailed herein after.

A second category consists of copolymers being block copolymers comprising:
- (A) one or more polymer segment(s) as defined in claim 1, preferably having a number average molecular weight ranging from about 1,200 to about 30,000, more preferably from about 2,500 to about 20,000, and
- (B) one or more nearly monodisperse polymer segment(s) of said polymerizable comonomer(s) having one or more olefinic double bond(s).

In such block copolymers, each of said polymer segment(s) as defined in claim 1 preferably has a polydispersity index (PDI) ranging from 1.05 to about 1.20, most preferably a PDI from 1.05 to about 1.15. In this category, each of said polymer segment(s) of said polymerizable comonomer(s) having one or more olefinic double bond(s) preferably has a number average molecular weight ranging from about 1,000 to about 150,000, more preferably from about 2,500 to about 100,000, most preferably from about 5,000 to about 50,000.

Within the category of block copolymers, the present invention comprises linear diblock copolymers, for example A-B, and linear triblock copolymers, for example A-B-A or B-A-B, and is also useful for making star-shaped copolymers and dendrimeric copolymers, provided that the initiator system used in the radical controlled polymerisation technique is suitably designed for this purpose, e.g. provided that the initiator used in an ATRP polymerization step has 3 or more halogen atoms. Preferred ATRP initiators of this type include chloroform, carbon tetrachloride, 2,2-bis(chloromethyl)-1,3-dichloropropane, 2,2-bis(bromomethyl)-1,3-dibromopropane), trichloro- and tribromocumene, and hexakis(α-chloro- or α-bromomethyl)benzene).

Within the category of block copolymers, the present invention is also useful for making comb copolymers, for instance by sequential ATRP.

Any combinations of such polymer categories may also be achieved in the final copolymer product, depending upon the polymerisation procedures used and the monomers which have been selected.

There is no specific restriction to the proportions of the respective comonomers building up the random or block, copolymer according to this embodiment of the present invention. In order to provide desirable properties, such as a suitable amphiphilicity, the following proportions are preferred:
- the polymer segment(s) (A) may amount from about 10 to about 90 % by weight, preferably from about 20 to about 80 % by weight, more preferably from about 30 to about 80 % by weight, and most preferably from about 40 to about 75 % by weight of said copolymer, and
- the polymer segment(s) (B) amount from about 90 to about 10 % by weight of said copolymer, preferably from about 80 to about 20 % by weight, more preferably from about 70 to about 20 % by weight, and most preferably from about 60 to about 25 % by weight of said copolymer.

These proportions may also be expressed in terms of number of monomeric units incorporated in each block of the copolymer or, in case of a random copolymer, in the global copolymer composition. The skilled person knows how to suitably tune the respective comonomer proportions and the most appropriate arrangement of polymer blocks in view of the physico-chemical properties, especially the hydrophilic/hydrophobic balance, to be exhibited by the final copolymer. However, when a comonomer having a specific desirable property is introduced into the copolymer according to this embodiment of the present invention, its proportion in the copolymer may be lower than 10 % by weight as long as said specific desirable property is not lost or significantly reduced.

The copolymers according to this embodiment of the present invention can be used as such or can be mixed or combined with one or more other compatible polymers and/or one or more polymer processing additives such as detailed below. Polymer compatibility between the copolymers of this invention and known polymers may easily determined by the skilled person while using knowledge and techniques readily available in the art. Any proportions of polymers in such mixtures are admissible as long as compatibility is conserved and the essential properties of each component of the combination or mixture are not lost.

Polymers contemplated for such combinations or mixtures belong to various polymer types but in particular include thermoplastic polymers and copolymers such as, but not limited to, polyesters (e.g. polyethylene terephthalate or polybutylene terephthalate), polycarbonates, polyamides, polyoxymethylene, polystyrene, polyolefins (e.g. polyethylene, polypropylene and ethylene/propylene copolymers), polyvinyl chloride, and styrene-acrylonitrile copolymers.

Additives suitable for such combinations or mixtures include, but are not limited to, lubricants, mold release agents, pigments, dyes, flameproofing agents, antioxidants, light stabilizers, heat stabilizers, fibrous and particulate fillers, reinforcing agents, antistatic agents, thixotropic agents, rheology control agents and mixtures thereof. The proportion of these one or more polymer processing additives may be up to about 50 % by weight, based on the cumulative weight of the copolymer according to the fifth embodiment of the present invention and the optional other polymer combined therewith. The suitable proportion of each individual additive is well known to the person skilled in the art of polymer processing and formulation, depending upon the technical effect that is expected from said additive.

Suitable lubricants and mold release agents include, but are not limited to, fatty acids, such as stearic acids, stearyl alcohol, fatty esters of 6 to 20 carbon atoms, e.g. stearic esters, metal salts of fatty acids, e.g. calcium, aluminum and zinc stearate, fatty amides such as stearamides, and silicone oils, montan-based waxes, polyethylene or polypropylene based waxes, paraffins, carboxylic esters obtained from long-chain carboxylic acids and ethanol, fatty monoalcohols, glycerol, ethane diol, pentaerythritol or other polyhydric alcohols.

Suitable pigments include, but are not limited to, inorganic compounds such as metal oxides and sulfides. Suitable dyes are those which can be used for transparent, semitransparent or opaque coloring of polymers, such as the azo pigment group consisting of azo, disazo, napthol, benzimidazolone, azocondensation products, metal complexes, isoindolinone and isoindoline pigments, chinophthalon pigments, dioxazine pigments and the polycyclic pigment group consisting of indigo, thioindigo, quinacridones, phthalocyanines, perylenes, perionones, anthraquinones (e.g. aminoanthra-quinones and hydroxyanthraquinones), anthrapyrimidines, indanthrones, flavanthrones, pyranthrones, anthantrones, isoviolanthrones, diketopyrrolopyrrole, carbazoles and the like. Pigments for coloring thermoplastics are known, for example, from R. Gachter et al. in Taschenbuch der Kunststoffadditive, Carl Hanser Verlag (1983) pages 494- 510. A first preferred group of pigments includes white pigments such as zinc oxide, zinc sulfide, lead white, lithopones, antimony white and titanium dioxide. A second preferred group of pigments includes black pigments such as iron oxide black (Fe₃O₄), spinel black, manganese black, cobalt black, antimony black, and carbon black (in this context, see G. Benzing, Pigmente fur Anstrichmittel, Expert-Verlag (1988), p. 78). Other suitable inorganic pigments include aluminum oxide, calcium carbonate, silicon oxide and silicates, chromium(III)oxide, titanium(IV)oxide, zirconium(IV)oxide, zinc phosphate, mixed metal oxide phosphates, molybdenum sulfide, cadmium sulfide, graphite, vanadates (e.g. bismuth vanadate), chromates (e.g. lead(IV) chromate), and molybdates (e.g. lead(IV) molybdate). Pigments and dyes are usually present in amounts of up to about 6 % by weight, preferably from about 0.5 % to about 3 % by weight, based on the cumulative weight of the copolymer according to the fifth embodiment of the present invention and the optional other polymer combined therewith.

Halogen-containing (in particular brominated compounds) or phosphorus-containing compounds, magnesium hydroxide and mixtures thereof, can be used as flameproofing additives or agents.

Suitable antioxidants and heat stabilizers which can be added to the copolymers of the invention are, for example, stearically hindered phenols, hydroquinones, and mixtures thereof, such as commercially available under the tradenames Topanol and Irganox, as well as copper halides, zinc halides, copper halide complexes, and secondary aromatic amines.

Suitable light stabilizers include, but are not limited to, various substituted resorcinols, salicylates, benzotriazoles, organic phosphites and phosphonites, benzophenones, and sterically hindered amines, such as commercially available under the tradename Tinuvin. Esters and/or amides of β-(3,5-di-*tert*-butyl-4-hydroxyphenyl) propionic acid and/or benzotriazole may likewise be used as stabilizers.

Suitable fibrous or pulverulent fillers include, but are not limited to, carbon fibers or glass fibers in the form of woven glass fabrics, glass mats or glass rovings, chopped glass, glass beads and wollastonite, particularly preferably glass fibers. When glass fibers are used, they may be provided with a selected size and/or an adhesion promoter for a better compatibility with the other components of the polymer composition. Glass fibers can be incorporated both in the form of short glass fibers and in the form of rovings.

Suitable particulate fillers include, but are not limited to, carbon black, amorphous silica, magnesium carbonate, powdered quartz, mica, bentonite, talc, feldspath and calcium silicates, such as wollastonite and kaolin.

Suitable antistatic agents include, but are not limited to, amine derivatives, such as N,N-bis(hydroxyalkyl)alkylamines or alkyleneamines, polyethylene glycol esters and glyceryl mono- and distearates, and mixtures thereof.

Mixing of the copolymers prepared according to the invention with the other polymers and/or additives may becarried out continuously or batchwise by mixing methods known per se, for example melting in an extruder, Banbury mixer, kneader, rawmill or calendar. The mixtures obtained can, for example, be pelletized or granulated or can be processed by any methods known in the polymer processing industry, for example by extrusion, injection-molding, or calendering.

In another embodiment, the present invention provides a process for making a block copolymer according to claim 18, said process comprising the steps of:
(a) preparing a macroinitiator being end-capped with a terminal group or atom by performing the living polymerization of a polymerizable monomer having one or more olefinic double bond(s) in the presence of an initiator containing at least one said terminal group or atom, and
(b) performing the controlled free radical polymerization of an alkoxyalkyl or alkylthioalkyl acrylate or an alkoxyalkyl or alkylthioalkyl α-substituted acrylate in the presence of a suitable initiator system comprising said macroinitiator from step (a).

For instance the controlled free radical polymerization of step (b) may be an ATRP polymerisation process, in which case the initiator system may comprise, in addition to the macroinitiator prepared in step (a), a transition metal compound and a ligand for solubilizing said transition metal. Alternatively, the controlled free radical polymerization of step (b) may be an NMP polymerisation process, in which case the initiator system may comprise an N-oxyl radical. The controlled free radical polymerization of step (b) may also be a MADIX polymerisation process, in which case the initiator system may comprise a xanthate based compound. The controlled free radical polymerization of step (b) may also be a RAFT polymerisation process, in which case the initiator system may comprise a sulfur-base chain transfer agent.

The macroinitiator used in step (a) may be obtained either by cationic polymerization or by a controlled free radical polymerization technique such as, but not limited to, MADIX, RAFT, NMP and ATRP. In the latter case, the macroinitiator is obtained in the presence of a transition metal compound and a ligand for solubilising said transition metal, both of them being as disclosed for instance with respect to the second embodiment of the present invention. Living homo-polymerization of a polymerizable monomer having one or more olefinic double bond(s) in step (a) is performed for such time until the number average molecular weight of the resulting macroinitiator achieves a targeted value. Living radical polymerization of an alkoxyalkyl or alkylthioalkyl acrylate or an alkoxyalkyl or alkylthioalkyl α-substituted acrylate is then performed in step (b) for such time until the number average molecular weight of the resulting polymer segment achieves a targeted value. The respective amounts of the polymerizable monomer having one or more olefinic double bond(s) used in step (a) and the alkoxyalkyl or alkylthioalkyl acrylate or an alkoxyalkyl or alkylthioalkyl α-substituted acrylate used in step (b) are selected in such a way as to obtain proportions by weight in the final copolymer as decribed in detail in the previous embodiment of the present invention.

After step (b), when the polymerizable comonomer is polyunsaturated such as a diolefin or acetylenically unsaturated, the resulting copolymer may if desired be further submitted to a hydrogenation step (d), e.g. in the presence of an appropriate catalyst such as, bu not limited to, a Wilkinson catalyst.

In yet another embodiment, the present invention provides a composition comprising one or more copolymers according to the embodiments described herein above, e.g. made by a process according to the embodiment described herein above. Such compositions may, in addition to the said copolymers, comprise one or more other polymers and/or one or more polymer processing additives such as previously described. Such compositions, which may be in various specific structural forms such as micelles, moldings, films, tubes and the like, are useful in a wide variety of industrial applications such as, but not limited to, for making:
- semiconductor devices including for the control of semiconductor (CdS) nanoparticles,
- nanotube composites, including micelle-encapsulated carbon nanotubes,
- chemically patterned surfaces,
- temperature-dependent photonic bandgap materials,
- seeds for emulsion polymerization of unsaturated monomers,
- dispersants for ceramic powders, e.g. α-alumina, in aqueous solution,
- crystal growth modifiers, e.g. for calcium carbonate or for baryum sulfate fibres,
- polyelectrolytes,
- adhesives,
- pigment compositions,
- superabsorbants,
- thickeners for paints and coatings,
- planographic plates, e.g. for offset printing,
- printing plates, e.g. in imaging applications,
- flocculants for the paper industry, and
- stabilizers for organic dyes.

For each type of such industrial applications, the compositions of the invention may be admixed with one or more adjuvants which are more specifically common in the relevant industrial field, while using the general knowledge pertinent to this area of technology. Just as one non-limiting example, when the compositions according to this embodiment of the invention are used for paints and coatings, they may include a binder such as, but not limited to, a crosslinkable alkyd resin, an acrylate resin, a polyester resin, an epoxy resin, a melamine resin, or a polyurethane based on a hydroxyl-containing acrylate, a polyester or polyether resin and an aliphatic or aromatic isocyanate, isocyanurate or polyisocyanate.

The present invention will be further described with reference to certain more specific embodiments and examples, but the present invention is not limited thereto but only by the attached claims. The following examples are given by way of illustration only.

### EXAMPLE 1 - POLYMERIZATION OF 1-ETHOXYETHYL ACRYLATE BY REVERSIBLE ADDITION-FRAGMENTATION TRANSFER (RAFT) POLYMERIZATION

The experimental conditions used in this example are:
- initiator : AIBN (azoisobutyronitrile),
- dithiocarbonyl compound : 2-cyano-2-butyldithiobenzoate (hereinafter CBDB),
- solvent : toluene, and
- monomer / dithiocarbonyl compound / initiator ratio = 100/1/0.25.

First, AIBN (0.0775 g) was dissolved in 29 ml of toluene. Then CBDB (0.4441 g) was dissolved in 29 ml of toluene. 1-ethoxyethyl acrylate (monomer) and these two solutions were degassed by bubbling with argon. In a reaction vial equipped with a reflux cooler and a septum, 0.00943 mole (1.36 mL) of 1-ethoxyethyl acrylate, 1.43 mL of AIBN solution and 1.45 mL of CBDB solution were added. The reaction vial was then heated to 70 °C. The number average molecular weight of the resulting polymer was about 5,600 after 4 hours, and about 8,000 after 10 hours, and its polydispersity index was 1.29.

### EXAMPLE 2 - polymerization of 1-ethoxyethyl acrylate with Nitroxide Mediated Polymerization (NMP)

0.0694 mole (10.0 mL) of 1-ethoxyethylacrylate was mixed, in the absence of a solvent, with 0.000347 mole (0.1322 g) of an initiator having the formula shown below:

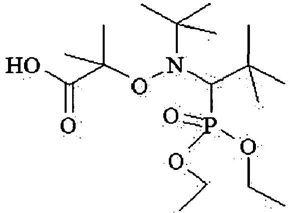

The reaction mixture was bubbled with nitrogen for 1 hour, then polymerisation reaction was started by immersing the reaction flask in an oil bath at 70 °C. Gel Permeation Chromatography after 3 hours reaction time reveals the formation of oligomers having a number average molecular weight of 1,150, i.e. a polymerisation degree of about 8, and a polydispersity index of 1.28.

### EXAMPLE 3 - POLYMERIZATION OF 1-ISOBUTOXYETHYL ACRYLATE

First, the monomer was passed through a small column of basic Al₂O₃ in order to remove traces of any residual acid. Then a mixture of 0.099 mole (18 mL) of 1-isobutoxyethyl acrylate, 6 mL of acetone as a solvent and 0.001986 mole (0.417 mL) of *N*,*N*,*N'*,*N"*,*N"*-pentamethyldiethylenetriamine (PMDETA) as a ligand was degassed by bubbling with nitrogen. Cu(I)Br (0.001986 mole, 0.285 g) was added and the reaction flask was placed in an oil bath at 50 °C. When the reaction mixture reached the desired temperature, polymerization was started by adding 0.001986 mole (0.2214 mL) of methyl-2-bromopropionate as an initiator. The reaction was ended by cooling the reaction mixture in liquid nitrogen. This resulted:
- after 3 hours, in a polymer with a number average molecular weight of 2,430, i.e. a polymerisation degree of about 14, and a polydispersity index of 1.11, and
- after 22 hours, in a polymer with a number average molecular weight of 4,030, i.e. a polymerisation degree of about 23, and a polydispersity index of 1.14.

### EXAMPLE 4 - THERMAL DEGRADATION OF POLY-1-ISOBUTOXYETHYL ACRYLATE

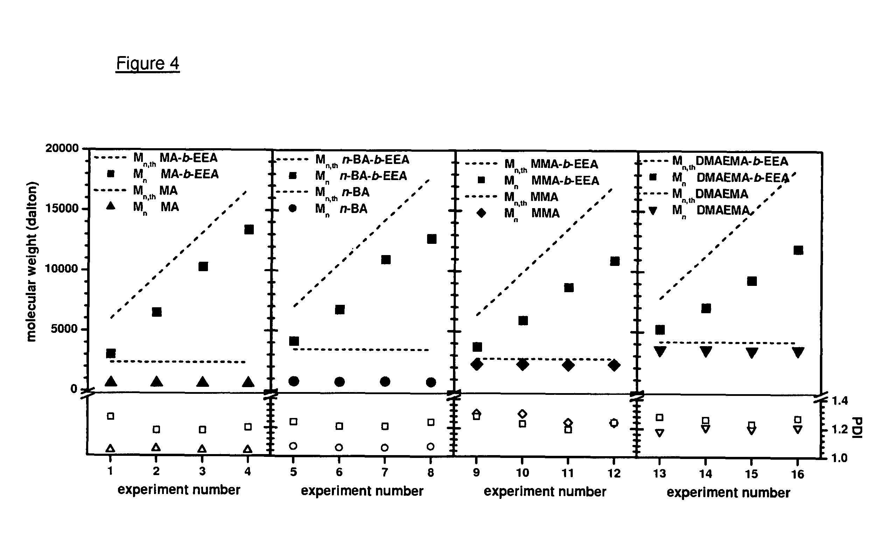

The polymer obtained in example 3 was submitted to thermogravimetric analysis. The resulting curve showing the loss of weight as a function of temperature is presented in figure 4. Complete deprotection of poly(1-isobutoxyethyl acrylate) into poly(acrylic acid) corresponds with a weight loss of 58.2 % which is in good agreement with the theoretical value.

Further heating above 200 °C results in further weight loss by anhydride formation, and heating above 250°C causes degradation of the polymer.

### EXAMPLE 5 - ATRP Polymerisation and copolymerisation of ethoxyethyl acrylate or ethoxyethylmethacrylate

A typical polymerization procedure was as follows: a macro-initiator was dissolved in the monomer and the solvent if so desired. The mixture was degassed by bubbling with nitrogen. Cu(I)Br as a catalyst was added and the reaction flask was placed in an oil bath at the desired reaction temperature. Polymerization was then started by adding the ligand, and was ended by cooling the reaction mixture in liquid nitrogen. Copper was finally removed by passing the diluted reaction mixture over a column filled with neutral Al₂O₃.

Table 1 below shows various polymerisation conditions with either ethoxyethyl acrylate (EEA) or ethoxyethylmethacrylate (EEMA) as a monomer, and the result thereof in terms of conversion, number average molecular weight (Mₙ) and polydispersity index (PDI).

**Table 1**

| Entry | Initiator | Ligand | Monomer | [M]₀/[In]₀/] [Cu]₀/[ligand]^{b} | Temp. (°C) | Time (min) | Conv. (%)^{c} | Mₙ (g/mol) | PDI |
|---|---|---|---|---|---|---|---|---|---|
| 1^{d} | 4 | 1 | EEMA | 50/1/5/10 | 50 | 135 | 78 | 11,650^{e} | 1.40^{e} |
| 2^{f} | 4 | 2 | EEMA | 50/1/0.5/0.75 | 50 | 60 | 50 | 4,630^{g} | 1.23^{g} |
| 3^{h} | 3 | 2 | EEMA | 80/1/0.5/0.75 | 90 | 180 | 53 | 6,290^{g} | 1.16^{g} |
| 4ⁱ | 5 | 2 | EEA | 50/1/1/1 | 50 | 270 | 68 | 4,960^{g} | 1.10^{g} |
| 5^{j} | 5 | 6 | EEA | 200/1/1/1 | 30 | 120 | 47 | 11,500^{g} | 1.35^{g} |
| 6^{d} | PMMA^{k} | 1 | EEMA | 65/1/5/10 | 50 | 80 | 14 | 10,550^{e} | 1.08^{e,l} |
| 7^{m} | PMMAⁿ | 2 | EEMA | 150/1/0.5/1 | 50 | 120 | 34 | 18,600^{g} | 1.19^{g} |
| 8° | PS^{p} | **2** | EEA | 50/1/1/1 | 50 | 240 | 71 | 6,350^{g} | 1.28^{g} |
| 9° | PnBA^{q} | **2** | EEA | 50/1/1/1 | 50 | 240 | 79 | 6,600^{g} | 1.18^{g} |
| 10° | PTHF' | **2** | EEA | 150/1/1/1 | 50 | 370 | 20 | 19,100^{g} | 1.15^{g} |
| 11° | PTHF^{s} | **2** | EEA | 50/1/1/1 | 50 | 120 | 74 | 10,800^{g} | 1.15^{g} |

The following legend is used in table 1:
**1** refers to *N*-octyl-2-pyridylmethanimine,
**2** refers to *N,N,N',N"*-pentamethyldiethylenetriamine (PMDETA),
**3** refers to 2,2,2-trichloroethanol,
**4** refers to ethyl-2-bromoisobutyrate,
**5** refers to methyl-2-bromopropionate,
**6** refers to tris[2-(dimethylamino)ethyl]amine (Me₆TREN)
^{b}[M]₀, [In]₀, [Cu]₀ and [ligand] = initial concentration of monomer, initiator, copper catalyst and ligand respectively.
^{c} Calculated from ¹H NMR.
^{d} 50 % toluene by volume; CuBr catalyst.
^{e} SEC with THF as eluent and PMMA standards.
^{f} 50 % anisole by volume, CuCl catalyst, 20 mole% CuCl₂ added.
^{g} SEC with CHCl₃ as eluent and polystyrene (PS) standards.
^{h} 55 % anisole by volume, CuCl catalyst, 20 mole% CuCl₂ added.
ⁱ 25 % acetone by volume, CuBr catalyst.
^{j} 25 % anisole by volume, CuBr catalyst.
^{k} PMMA macro-initiator with Mₙ = 7950^{e}, and M_{w}/Mₙ= 1.11.
^{l} after precipitation in hexane.
^{m} 50 % anisole by volume, CuBr catalyst.
ⁿ PMMA macro-initiator with Mₙ = 8950^{g}, and M_{w}/Mₙ= 1.10^{g}.
^{o} bulk polymerization, CuBr catalyst.
^{p} PS macro-initiator with Mₙ = 2100^{g}, and M_{w}/Mₙ = 1.11^{g}.
^{q} poly(n-butyl acrylate) (PnBA) macro-initiator with Mₙ= 1900^{g}, and M_{w}/Mₙ= 1.14^{g}.
^{r} Polytetrahydrofuran (PTHF) macro-initiator with Mₙ= 10900^{g}, and M_{w}/Mₙ= 1.16^{g}.
^{s} Polytetrahydrofuran (PTHF) macro-initiator with Mₙ= 6600^{g}, and M_{w}/Mₙ= 1.23^{g}

### EXAMPLE 6 - THERMAL DEGRADATION OF A PnBA-PEEA BLOCK COPOLYMER

The PnBA-PEEA block copolymer obtained as entry 9 in example 5 was submitted to thermogravimetric analysis. The resulting curve showing the loss of weight as a function of temperature is presented in figure 2.

### EXAMPLE 7 - THERMAL DEGRADATION OF A PTHF-PEEA BLOCK COPOLYMER

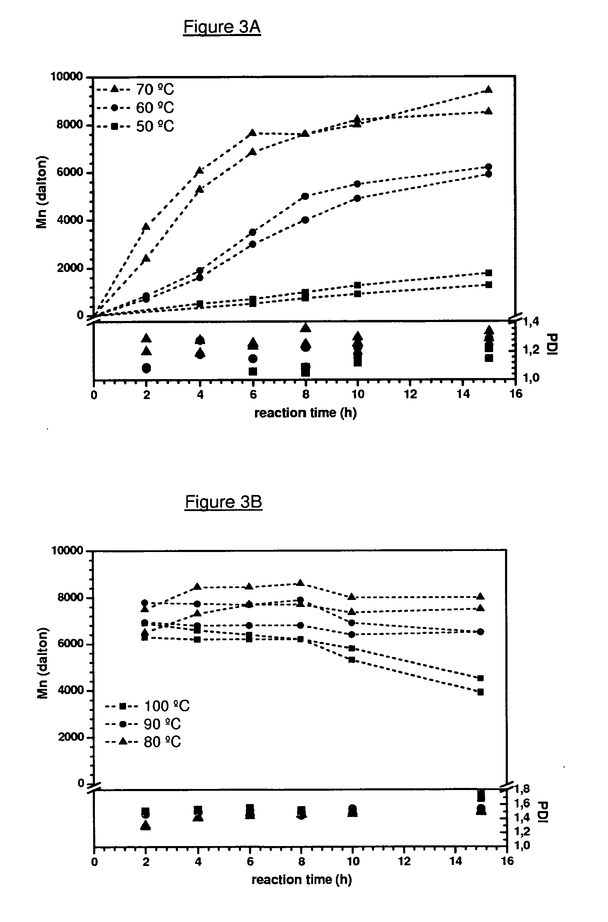

The PTHF-PEEA block copolymer obtained as entry 10 in example 5 was submitted to thermogravimetric analysis (performed at a heating speed of 10 °C/minute). The resulting curve showing the loss of weight as a function of temperature is presented in figure 3.

### EXAMPLE 8 - RAFT polymerisation of ethoxyethyl acrylate

Polymerizations of ethoxyethyl acrylate (EEA) were performed on a Chemspeed Accelerator^{™} SLT100 automated synthesizer. This synthesis robot was equipped with a four needle head, a solid dosing unit, and an array of 16 parallel 13 mL glass reactors. Reactors were heated by a Huber Unistat Tango via their double jackets. Temperature optimization of the polymerization reaction was performed with an array of individually heatable reactors. In this array, each reactor has a separate ceramic heating mantle and an internal temperature sensor providing the possibility to perform 16 parallel reactions at 16 different temperatures. Moreover, the reactors were equipped with a cold-finger reflux condenser that could be cooled or heated at will from -5ºC until 50ºC. An inert atmosphere was maintained by applying a 1.1 bar flow over the reactors and a 1.5 bar argon flow through the hood of the synthesis robot. Gel permeation chromatography (GPC) of poly(EEA) was measured on a Shimadzu system equipped with a SCK-10A system controller, a LC-10AD pump, a RID-10A refractive index detector and a PL gel 5 µm Mixed-D column at 50ºC using a chloroform/triethylamine/ isopropanol (94/4/2) mixture as eluent at a flow rate of 1 mL/minute. Molecular weights were calculated on the basis of poly(methyl methacrylate) standards. ¹H-NMR spectra were recorded on a Varian Mercury 400 spectrometer or a Varian Gemini 300 spectrometer, chemical shifts being given in ppm relative to TMS or solvent signals. Thermogravimetric analyses were performed utilizing a Netsch TG 209 F1 Iris apparatus.

Parallel temperature optimization was carried out as follows. In order to obtain an inert atmosphere, the hood of the synthesis robot was flushed for at least 90 minutes with argon before starting polymerization procedure. An inert atmosphere was created inside the individually heatable reaction vessels by performing three cycles of heating (at 120ºC) under vacuum (15 minutes at about 25 mbar) followed by argon flushing (1 minute). During polymerizations, the temperature of the cold-finger reflux condensers was set to - 5ºC.

1-ethoxyethyl acrylate (1.36 g; 9.34 mmol) and stock solutions of AIBN (1.45 mL; 0.016 M) as initiator and CBDB (as a RAFT agent) in toluene (1.45 mL; 0.065 M) were dispensed into the reaction vessels, resulting in 4.2 mL reaction mixtures with EEA/RAFT agent/initiator ratios of 100/1/0.25 and with a 2.2 M monomer concentration. Mixtures were heated to 50ºC, 60ºC, 70ºC, 80ºC, 90ºC and 100ºC respectively, and vortexed at 600 rpm for up to 15 hours. Samples (100 µL aliquots) were taken from each reactor to 2.0 mL vials prefilled with GPC eluent (1.0 mL; chloroform/triethylamine/isopropanol) at 2, 4, 6, 8, 10 and 15 hours polymerization time respectively, and then used for GPC analysis.

The plots of the number average molecular weight (Mₙ) as a function of time demonstrate the good reproducibility (two experiments were performed at each polymerisation temperature) of RAFT polymerization of EEA at all temperatures (Figures 5A and 5B). Polymerizations at 60ºC and 70 ºC respectively showed (Figure 5A) a clear increase of Mₙ against time (with Mₙ increasing from about 1,500 after 4 hours to about 5,000 after 10 hours at 60°C, and Mₙ increasing from about 2,400 after 2 hours to about 7,500 after 8 hours at 70°C), while the polydispersity indices (PDI's) remained at values below about 1.3. GPC traces obtained for the product of polymerization at 70ºC also confirms this increase in molecular weight as a function of time. Polymerizations carried out at 80ºC, 90ºC and 100ºC respectively showed (figure 5B) that relatively high conversions were already reached after 2 hours, with number average molecular weights (Mₙ) ranging from about 6,400 to about 7,800.

Experimental Mₙ values, being lower than the theoretical value for 100% monomer conversion, are partially due to the PMMA standard used for calibrating the GPC system but also to incomplete conversion, as determined by ¹H-NMR spectroscopy for products obtained after a reaction time of 15 hours: 55% at 60ºC; 82% at 70ºC; 94% at 80ºC; 94% at 90ºC and 83% at 100ºC. Moreover, both molecular weight and PDI values may be influenced by partial deprotection of the protected acid moieties within the polymer obtained. Such deprotection cannot only occur during synthesis but also in the GPC eluent: interactions of the acid with the column material cannot be avoided (utilizing chloroform as eluent), thus resulting in longer retention times and tailing of the signals. This effect was clearly observed in GPC traces of the final polymer obtained at 100ºC after storing it in the GPC eluent after 6 days: the more signal tailing observed and the lower retention times suggest some partial deprotection already occurring under these conditions. Interactions of the polymer with the column material may also explain the slight decrease of Mₙ for polymerizations performed at 80ºC, 90ºC and 100 ºC after 8 hours (see Figure 5B).

### EXAMPLE 9 - thermolysis of a poly(ethoxyethyl acrylate) prepared by RAFT Polymerisation

In this example, GPC characterization of poly(acrylic acid) (hereinafter referred as PAA) samples was performed on a Waters system with a 1515 pump, a 2414 refractive index detector and a Waters Styragel HT4 column while using *N,N-*dimethylformamide with 5·10⁻³ M NH₄PF₆ as eluent (in order to avoid interactions between acid groups and the column material) at a flow rate of 0.5 mL · min⁻¹ at 50 °C.

Deprotection of the various poly-EEA obtained in example 8 was performed to obtain nearly monodisperse poly(acrylic acid) (PAA). Different ways of deprotection resulting in linear or, if so desired, cross-linked PAA were investigated. A first deprotection method using the GPC eluent was already mentioned in example 8. For instance, GPC samples (in the CHCl₃/NEt₃/*i*-PrOH eluent) from polymerisation at the relevant temperature were kept at ambient temperature for two weeks, after which period all polymers precipitated, indicating that PAA was indeed formed. Samples were more than 90% deprotected as determined by ¹H-NMR spectroscopy for a few samples. The resulting plots of Mₙ and PDI as a function of time are shown in Figures 6A and 6B. A significant increase of Mₙ as a function of conversion was observed for the PAA samples, especially at RAFT polymerisation temperatures ranging from 50°C to 80°C. Moreover very narrow molecular weight distributions (PDI not above 1.20, and even as low as about 1.05) were obtained in all investigated samples, thus proving the possibility of creating near-monodisperse PAA via RAFT polymerization of the protected EEA monomer followed by deprotection. In addition, these results prove that RAFT polymerizations at 80ºC to 100 ºC were also well controlled despite the fact that partial deprotection already took place during polymerization.

A second deprotection method was investigated as follows. The PEEA samples obtained in example 8 were deprotected by thermolysis at 160 ºC for 3 hours in a thermal gravimetrical analyzer under both oxygen atmosphere or argon atmosphere respectively. ¹H-NMR spectroscopy revealed complete deprotection of the soluble part of the polymer and GPC characterization (with DMF as the eluent) exposed two signals as follows:
- a signal at 11 minutes corresponding to the exclusion limit of the column used, representing a molecular weight exceeding 1 Mda, this high molecular weight fraction being interpreted as cross-linked PAA, and
- a signal at 19.5 minutes, which was broadened presumably due to partial cross-linking, corresponding to PEEA obtained after mild deprotection.
Thermolysis under oxygen atmosphere resulted in a higher content of cross-linked PAA than thermolysis under nitrogen atmosphere.

### EXAMPLE 10 - RAFT copolymerization of EEA and acrylic comonomers

The controlled synthesis of block copolymers containing a PEEA segment together with another acrylic comonomer segment was investigated in an apolar solvent (toluene). Such block copolymers were obtained via synthesis in an apolar solvent. Block copolymerizations were performed at the temperature of 70ºC. The synthesis robot described in example 8 was used for the synthesis of 16 block copolymers consisting of units of a first block of methyl acrylate (MA) (experiments 1 - 4), *n*-butyl acrylate (n-BA) (experiments 5 - 8), methyl methacrylate (MMA) (experiments 9 - 12) or *N,N*-(dimethyl-amino)ethyl methacrylate (DMAEMA) (experiments 13 - 16) and units of a second block of EEA. The first blocks were polymerized for 3 hours after which a sample was taken for GPC analysis. Subsequently, EEA was added and polymerizations were continued for 12 hours.

GPC traces of the copolymers obtained show the expected shift towards higher molecular weights (lower retention times) with increasing EEA units. Shoulders present in the GPC traces of the first blocks are probably due to low conversions resulting in incomplete equilibration between the polymeric RAFT-agent and the free polymeric radicals. Figure 7 plots the Mₙ and PDI values that were calculated (pMMA calibration) from GPC traces of the first blocks and the resulting block copolymers for each of experiments 1-16, clearly demonstrating the ability to synthesize EEA containing block copolymers.

Polymerizations with an alkyl acrylate monomer (MA or n-BA) as the first block showed that, after addition of the EEA to the active centers of the first block, polymerization was continued and resulted in copolymers with a short first block of MA or *n*-BA and a random/gradient second block of MA and EEA or *n*-BA and EEA. The molecular weights of the resulting copolymers largely exceeded the Mₙ of the first block demonstrating that indeed both the first monomer (MA or *n*-BA) and EEA were copolymerized.

Molecular weights obtained for the methacrylate (MMA or DMAEMA) first blocks revealed a monomer conversion close to 100%. After addition of the second monomer EEA, the block copolymers were successfully synthesized as can be concluded from the GPC analysis.

For all EEA-containing copolymers, the molecular weight distributions were relatively narrow (PDI < 1.30), indicating good control over the block copolymerizations. Composition of the resulting block copolymers was further determined by ¹H-NMR spectroscopy and is presented in the table below. The integral ratios of the CH₂ and/or CH₃ resonances next to the ester groups (MA, *n*-BA, MMA, DMAEMA: 3.65, 4.05, 3.60 or 4.10 ppm, respectively) or the ether bond (EEA: 3.50 and 3.72 ppm) in the polymers were used to determine the ratio of the two present monomers. For the MA and MMA containing copolymers, the integral of the CH resonance of EEA (5.90 ppm) was also used to calculate the monomer ratios, because the CH₃ resonances of MA and MMA overlapped with the CH₂ signals of EEA. Moreover, the integrals of the aromatic resonances of the RAFT agent were applied to calculate the number average degree of polymerization (DPₙ) for the monomers present in the block copolymers.

**Table**

| Exp Nr | Monomer A | DP_{A,NMR} | DP_{EEA,NMR} |
|---|---|---|---|
| 1 | MA | 19 | 9 |
| 2 | MA | 17 | 22 |
| 3 | MA | 18 | 35 |
| 4 | MA | 20 | 52 |
| 5 | n-BA | 18 | 20 |
| 6 | n-BA | 18 | 44 |
| 7 | n-BA | 19 | 73 |
| 8 | n-BA | 22 | 87 |
| 9 | MMA | 23 | 6 |
| 10 | MMA | 23 | 12 |
| 11 | MMA | 23 | 20 |
| 12 | MMA | 23 | 32 |
| 13 | DMAEMA | 22 | 8 |
| 14 | DMAEMA | 22 | 20 |
| 15 | DMAEMA | 22 | 35 |
| 16 | DMAEMA | 22 | 51 |

¹H-NMR spectroscopy proved the successful incorporation of the EEA monomer into all block copolymers. Moreover, the NMR data confirmed the incomplete polymerization of the EEA second blocks as was already indicated by GPC characterization. In addition, the *n*-BA and DMAEMA first blocks resulted in a higher degree of polymerization of EEA compared to the MA and MMA copolymerizations.

Deprotection of the EEA-containing block copolymers obtained hereinabove was performed by heating the CDCl₃ ¹H-NMR solutions under pressure for 3 hours to 80ºC in closed 2 mL vials. After three hours, the block copolymer solutions with a high EEA content became cloudy indicating deprotection of the acrylic acid. ¹H-NMR spectroscopy in DMSO-*d6* revealed 85 to 100% deprotection for randomly selected block copolymers. The GPC traces for the p(MA-*b*-AA), p(*n*-BA-b-AA), p(MMA-*b*-AA) and p(DMAEMA-*b*-AA) were alsoobtained and revealed monomodal distributions and low polydispersity indices (PDI < 1.20) for all block copolymers demonstrating successful deprotection resulting in well-defined PAA-containing block copolymers. Some of the GPC traces show slight shoulders at lower retention times (higher molecular weight) which are indicative of minor cross-linking reactions.

## Claims

1. A polymer segment of an acrylic monomer with a polydispersity index (PDI) ranging from 1.05 to 1.30 and a number average molecular weight ranging from 600 to 50,000, said polymer segment being end-capped with a terminal group or atom selected from the group consisting of halogen, nitroxide, xanthate and thiocarbonylthio, **characterised in that** said monomer is selected from the group consisting of 1-ethoxyethyl acrylate, 1-methoxyethyl acrylate, 1-isopropoxyethyl acrylate, 1-*iso*-butoxyethyl acrylate, 1-(*tert*-butoxy)ethyl acrylate, 1-ethoxymethyl acrylate, 1-methoxymethyl acrylate, 1-isopropoxymethyl acrylate, 1-butoxymethyl acrylate, 1-(*tert*-butoxy)-methyl acrylate, 1-ethylthioethyl acrylate, 1-methylthioethyl acrylate, 1-isopropylthioethyl acrylate, 1-butylthioethyl acrylate, 1-(*tert* butyl)thioethyl acrylate, 1-ethylthiomethyl acrylate, 1-methylthiomethyl acrylate, 1-isopropylthiomethyl acrylate, 1-butylthiomethyl acrylate, 1-(*tert*-butyl)thiomethyl acrylate, 1-ethoxyethyl methacrylate, 1-methoxyethyl methacrylate, 1-isopropoxyethyl methacrylate, 1-butoxyethyl methacrylate, 1-(*tert*-butoxy)ethyl methacrylate, 1-ethoxymethyl methacrylate, 1-methoxymethyl methacrylate, 1-isopropoxymethyl methacrylate, 1-*iso*-butoxymethyl methacrylate, 1-(*tert*-butoxy)methyl methacrylate, 1-ethylthioethyl methacrylate, 1-methylthioethyl methacrylate, 1-isopropylthioethyl methacrylate, 1-butylthioethyl methacrylate, 1-(*tert-*butyl)thioethyl methacrylate, 1-ethylthiomethyl methacrylate, 1-methylthiomethyl methacrylate, 1-isopropylthiomethyl methacrylate, 1-butylthiomethyl methacrylate and 1-(*tert*-butyl)thiomethyl methacrylate.

2. A polymer segment according to claim 1, wherein said terminal atom is chloro or bromo.

3. A polymer segment according to claim 1 or claim 2, wherein said monomer is 1-ethoxyethyl acrylate.

4. A method for making a polymer segment according to any of claims 1 to 3, said polymer segment being end-capped with a halogen atom, comprising polymerizing said monomer under an inert atmosphere, at a temperature ranging from 20 °C to 110 °C, in the presence of an initiation system comprising a transition metal compound, a ligand for solubilising said transition metal and an initiator having a radically transferable atom, said ligand being selected from the group consisting of 1,10-phenanthroline, cryptands, K222, crown ethers, 18-crown-6-ether, carbon monoxide, porphyrins, porphycenes, ethylenediamine, propylenediamine, *N,N,N',N",N"-*pentamethyldiethylenetriamine, tris[2-(dimethyl-amino)ethyl]amine, aminoalcohols, aminopropanol, aminoethanol, diglyme, triethyleneglycol dimethyl ether, pentaoxapentadecane, cyclopentadienyl, cyclooctadienyl and norbornadienyl.

5. A method for making a polymer segment according to any of claims 1 to 3, said polymer segment being end-capped with a xanthate group, comprising polymerizing said monomer under MADIX conditions in the presence of an initiation system comprising at least one compound bearing a xanthate functionality and optionally in the presence of one or more free-radical initiators.

6. A method for making a polymer segment according to any of claims 1 to 3, said polymer segment being end-capped with a nitroxide group, comprising polymerizing said monomer under NMP conditions in the presence of an initiation system comprising at least a N-oxyl radical and optionally in the presence of one or more free-radical initiators.

7. A method for making a polymer segment according to any of claims 1 to 3, said polymer segment being end-capped with a thiocarbonylthio group, comprising polymerizing said monomer under RAFT conditions in the presence of an initiation system comprising at least a sulfur-based chain transfer agent and optionally in the presence of one or more free-radical initiators.

8. The method of claim 4, wherein:
(a) the initiator has the general formula R₁₁R₁₂R₁₃CX wherein:
- X is halogen; and
- R₁₁, R₁₂ and R₁₃ are each independently selected from the group consisting of hydrogen, halogen, C₁₋₄ alkyl wherein one or more hydrogen atoms are optionally replaced with halogen, C₃₋₁₀ cycloalkyl, hydroxyl, cyano, vinyl, oxiranyl, glycidyl, and aryl optionally substituted with one or more 6₁₋₄ alkyl and/or halogen, provided that no more than two of R₁₁, R₁₂ and R₁₃ is hydrogen; or
(b) the transition metal compound is copper monochloride, copper monobromide, zinc dichloride or zinc dibromide.

9. The method of claim 4, wherein:
- the molar proportion of the transition metal compound with respect to the initiator is from 0.01:1 to 10:1; or
- the molar proportion of the ligand with respect to the transition metal compound is from 1:1 to 2:1; or
- the molar proportion of the ligand with respect to the initiator is from 0.5:1 to 10:1.

10. The method of claim 5, wherein:
(a) the compound bearing a xanthate functionnality has the general formula:
R²-[O-C(=S)-S-R¹]ₚ (I)
wherein
- R² is a group selected from the group consisting of alkyl, acyl, aryl, alkenyl, alkynyl, cycloalkyl, cycloalkenyl, cycloalkynyl and heterocyclic, said group being substituted by one or more halogen atom(s) independently selected from the group consisting of fluoro, chloro and bromo,
- R¹ is a group selected from the group consisting of alkyl, acyl, aryl, alkenyl, alkynyl, cycloalkyl, cycloalkenyl, cycloalkynyl and heterocyclic, said group being optionally substituted by one or more substituents independently selected from the group consisting of aryl, alkoxycarbonyl, aryloxycarbonyl, carboxyl, thiocarboxyl, acyloxy, carbamoyl, cyano, alkylcarbonyl, alkyl-arylcarbonyl, arylcarbonyl, arylalkylcarbonyl, phthalimido, maleimido, succinimido, amidino, guanidino, hydroxyl, sulfhydryl, amino, halogen, allyl, epoxy, alkoxy, cycloalkoxy, aryloxy, thioalkyl, thioaryl, alkali metal carboxylate, alkali metal sulfonate and quaternary ammonium salt; and
- p is an integer from 1 to 10, and
(b) the optional free-radical initiator is selected from:
- organic peroxides, hydroperoxides, peresters and percarbonates;
- inorganic persulfates;
- azo compounds; and
- redox systems including combinations of one or more compounds selected from the group consisting of hydrogen peroxide, alkyl peroxides, iron salts, titanium salts, zinc formaldehyde-sulfoxylate, sodium formaldehyde-sulfoxylate, alkali metal or ammonium persulfates, alkali metal or ammonium perborates, alkali metal or ammonium perchlorates, alkali metal bisulfites, arylphosphinic acids and ascorbic acid.

11. The method of claim 6, wherein said N-oxyl radical is selected from the group consisting of:
- stable free β-substituted nitroxide radicals, *tert*-butyl 1-phenyl-2-methylpropyl nitroxide, *tert*-butyl 1-(2-naphthyl)-2-methylpropyl nitroxide, *tert*-butyl 1-diethylphosphono-2,2-dimethylpropyl nitroxide, *tert*-butyl 1-dibenzyl-phosphono-2,2-dimethylpropyl nitroxide, phenyl 1-diethyl-phosphono-2,2-dimethylpropyl nitroxide, phenyl 1-diethylphosphono-1-methylethyl nitroxide and 1-phenyl-2-methylpropyl 1-diethylphosphono-1-methylethyl nitroxide; and
- N-oxyl radicals comprising a spiro ring system, 8,8-dimethyl-10-oxa-7-aza-spiro[5.5]undecan-7-oxyl, 7,7-dimethyl-9-oxa-6-aza-spiro[4.5] decan-6-oxyl and 2,2,6,6-tetramethyl-1-aza-4-thia-cyclohexane-1,4,4-trioxide;
and wherein the optional free-radical initiator is selected from:
- organic peroxides, hydroperoxides, peresters and percarbonates;
- inorganic persulfates;
- azo compounds;
- redox systems including combinations of one or more compounds selected from the group consisting of hydrogen peroxide, alkyl peroxides, iron salts, titanium salts, zinc formaldehyde-sulfoxylate, sodium formaldehyde-sulfoxylate, alkali metal or ammonium persulfates, alkali metal or ammonium perborates, alkali metal or ammonium perchlorates, alkali metal bisulfites, arylphosphinic acids and ascorbic acid; and
- thiatriazolyl radicals, dithiadiazolyl radicals or 2,5-dihydro-1H-1,2,4-triazol-2-yl radicals.

12. The method of claim 6, wherein said N-oxyl radical is in a proportion of 0.005 % to 5 % by weight of the polymerizable monomer.

13. The method of claim 6, being performed within a range of polymerisation temperatures from 50 °C to 180 °C.

14. The method of claim 7, wherein said sulfur-based chain transfer agent is selected from the group consisting of:
- vinylogous dithioesters, benzyl 3,3-di(benzylthio)prop-2-enedithioate and 3-benzylthio-5,5-dimethylcyclohex-2-ene-1-thione,
- thiocarbonylthio compounds with α-nitrogen atoms, benzyl 1-pyrrole-carbodithioate, benzyl 1-(2-pyrrolidinone)carbodithioate, 2-cyano-but-2-yl 1-pyrrolecarbodithioate and 2-cyanoprop-2-yl 1-pyrrolecarbodithioate,
- benzyl (1,2-benzenedicarboximido)carbodithioate,
- dithiocarbamates,
- thiocarbonylthio compounds with an α-oxygen substituent, O-ethyl S-(1-phenylethyl)xanthate, O-ethyl S-(2-(ethoxycarbonyl)prop-2-yl)xanthate, O-ethyl S-(2-cyanoprop-2-yl)xanthate, O-ethyl S-(2-cyanoprop-2-yl)xanthate, O-ethyl S-cyanomethyl xanthate, O-phenyl S-benzyl xanthate and O-pentafluorophenyl S-benzyl xanthate,
- bis(thiocarbonyl) disulfides,
- 2-cyano-2-butyldithiobenzoate, and
- benzyl 1-imidazolecarbodithioate.

15. The method of claim 7, being performed within a range of polymerisation temperatures from 40 °C to 110 °C.

16. The method of claim 4, being performed at temperatures from 20 °C to 55 °C.

17. A polymer segment according to claim 1, having a number average molecular weight ranging from 1,200 to 15,000.

## Patentansprüche

1. Polymersegment eines Acrylmonomers mit einem Polydispersitätsindex (PDI) im Bereich von 1,05 bis 1,30 und einem zahlengemittelten Molekulargewicht im Bereich von 600 bis 50.000, wobei das Polymersegment eine Endkappe mit einer terminalen Gruppe oder einem terminalen Atom aufweist, die bzw. das ausgewählt ist aus der Gruppe bestehend aus Halogen, Nitroxid, Xanthat und Thiocarbonylthio, **dadurch gekennzeichnet, dass** das Monomer ausgewählt ist aus der Gruppe bestehend aus 1-Ethoxyethylacrylat, 1-Methoxyethylacrylat, 1-Isopropoxyethylacrylat, 1-Isobutoxyethylacrylat, 1-(tert-Butoxy)ethylacrylat, 1-Ethoxymethylacrylat, 1-Methoxymethylacrylat, 1-Isopropxymethylacrylat, 1-Butoxymethylacrylat, 1-(tert-Butoxy)methylacrylat, 1-Ethylthioethylacrylat, 1-Methylthioethylacrylat, 1-Isopropylthioethylacrylat, 1-Butylthioethylacrylat, 1-(tert-Butyl)thioethylacrylat, 1-Ethylthiomethylacrylat, 1-Methylthiomethylacrylat, 1-Isopropylthiomethylacrylat, 1-Butylthiomethylacrylat, 1-(tert-Butyl)thiomethylacrylat, 1-Ethoxyethylmethacrylat, 1-Methoxyethylmethacrylat, 1-Isopropoxyethylmethacrylat, 1-Butoxyethylmethacrylat, 1-(tert-Butoxy)ethylmethacrylat, 1-Ethoxymethylmethacrylat, 1-Methoxymethylmethacrylat, 1-Isopropoxymethylmethacrylat, 1-Butoxymethylmethacrylat, 1-(tert-Butoxy)methylmethacrylat, 1-Ethylthioethylmethacrylat, 1-Methylthioethylmethacrylat, 1-Isopropylthioethylmethacrylat, 1-Butylthioethylmethacrylat, 1-(tert-Butyl)thioethylmethacrylat, 1-Ethylthiomethylmethacrylat, 1-Methylthiomethylmethacrylat, 1-Isopropylthiomethylmethacrylat, 1-Butylthiomethylmethacrylat und 1-(tert-Butyl)thiomethylmethacrylat.

2. Polymersegment nach Anspruch 1, wobei das terminale Atom Chlor oder Brom ist.

3. Polymersegment nach Anspruch 1 oder Anspruch 2, wobei das Monomer 1-Ethoxyethylacrylat ist.

4. Verfahren zum Herstellen eines Polymersegments nach einem der Ansprüche 1 bis 3, wobei das Polymersegment eine Endkappe mit einem Halogenatom aufweist, umfassend das Polymerisieren des Monomers unter einer inerten Atmosphäre, bei einer Temperatur im Bereich von 20°C bis 110°C, in Gegenwart eines Initiierungssystems, das eine Übergangsmetallverbindung, einen Liganden zum Löslichmachen des Übergangsmetalls und einen Initiator mit einem radikal transferierbaren Atom umfasst, wobei der Ligand ausgewählt ist aus der Gruppe bestehend aus 1,10-Phenanthrolin, Cryptanden, K222, Kronenether, 18-Krone-6-ether, Kohlenmonoxid, Porphyrinen, Porphycenen, Ethylendiamin, Propylendiamin, N,N,N',N",N"-Pentamethyldiethylentriamin, Tris[2-(dimethyl-amino)ethyl]amin, Aminoalkoholen, Aminopropanol, Aminoethanol, Diglym, Triethylenglycoldimethylether, Pentaoxapentadecan, Cyclopentadienyl, Cyclooctadienyl und Norbornadienyl.

5. Verfahren zum Herstellen eines Polymersegments nach einem der Ansprüche 1 bis 3, wobei das Polymersegment eine Endkappe mit einer Xanthatgruppe aufweist, umfassend das Polymerisieren des Monomers unter MADIX-Bedingungen in Gegenwart eines Initiierungssystems, das mindestens eine Verbindung umfasst, die eine Xanthatfunktionalität trägt, und wahlweise in Gegenwart eines freien Radikalinitiators oder mehrerer freier Radikalinitiatoren.

6. Verfahren zum Herstellen eines Polymersegments nach einem der Ansprüche 1 bis 3, wobei das Polymersegment eine Endkappe mit einer Nitroxidgruppe aufweist, umfassend das Polymerisieren des Monomers unter NMP-Bedingungen in Gegenwart eines Initiierungssystems, das mindestens ein N-Oxylradikal umfasst, und wahlweise in Gegenwart eines freien Radikalinitiators oder mehrerer freier Radikalinitiatoren.

7. Verfahren zum Herstellen eines Polymersegments nach einem der Ansprüche 1 bis 3, wobei das Polymersegment eine Endkappe mit einer Thiocarbonylthiogruppe aufweist, umfassend das Polymerisieren des Monomers unter RAFT-Bedingungen in Gegenwart eines Initiierungssystems, das mindestens ein auf Schwefel basierendes Kettentransfermittel umfasst, und wahlweise in Gegenwart eines freien Radikalinitiators oder mehrerer freier Radikalinitiatoren.

8. Verfahren nach Anspruch 4, wobei:
(a) der Initiator die allgemeine Formel R₁₁R₁₂R₁₃CX hat, wobei:
- X Halogen ist, und
- R₁₁, R₁₂ und R₁₃ jeweils unabhängig ausgewählt sind aus der Gruppe bestehend aus Wasserstoff, Halogen, C₁₋₄-Alkyl, wobei ein oder mehrere Wasserstoffatom(e) wahlweise ersetzt sind durch Halogen, C₃₋₁₀-Cycloalkyl, Hydroxyl, Cyano, Vinyl, Oxiranyl, Glycidyl und Aryl, wahlweise substituiert mit einem oder mehreren C₁₋₄-Alkyl und/oder Halogen, vorausgesetzt, dass nicht mehr als zwei von R₁₁, R₁₂ und R₁₃ Wasserstoff sind; oder
(b) die Übergangsmetallverbindung Kupfermonochlorid, Kupfermonobromid, Zinkdichlorid oder Zinkdibromid ist.

9. Verfahren nach Anspruch 4, wobei:
- der Molanteil der Übergangsmetallverbindung in Bezug auf den Initiator von 0,01:1 bis 10:1 reicht; oder
- der Molanteil des Liganden in Bezug auf die Übergangsmetallverbindung von 1:1 bis 2:1 reicht; oder
- der Molanteil des Liganden in Bezug auf den Initiator von 0,5:1 bis 10:1 reicht.

10. Verfahren nach Anspruch 5, wobei:
(a) die Verbindung, die eine Xanthatfunktionalität trägt, die allgemeine Formel:
R²-[O-C(=S)-S-R¹]ₚ (I)
hat, wobei
- R² eine Gruppe ausgewählt aus der Gruppe bestehend aus Alkyl, Acyl, Aryl, Alkenyl, Alkinyl, Cycloalkyl, Cycloalkenyl, Cycloalkinyl und hetercyclisch ist, wobei die Gruppe durch ein oder mehrere Halogenatom(e) substituiert ist, das bzw. die unabhängig ausgewählt ist bzw. sind aus der Gruppe bestehend aus Fluor, Chlor und Brom,
- R¹ eine Gruppe ausgewählt aus der Gruppe bestehend aus Alkyl, Acyl, Aryl, Alkenyl, Alkinyl, Cycloalkyl, Cycloalkenyl, Cycloalkinyl und hetercyclisch ist, wobei die Gruppe wahlweise durch einen oder mehrere Substituenten substituiert ist, der bzw. die unabhängig ausgewählt ist bzw. sind aus der Gruppe bestehend aus Aryl, Alkoxycarbonyl, Aryloxycarbonyl, Carboxyl, Thiocarboxyl, Acyloxy, Carbamoyl, Cyano, Alkylcarbonyl, Alkylarylcarbonyl, Arylcarbonyl, Arylalkylcarbonyl, Phtalimido, Maleimido, Succinimido, Amidino, Guanidino, Hydroxyl, Sulfhydryl, Amino, Halogen, Allyl, Epoxy, Alkoxy, Cycloalkoxy, Aryloxy, Thioalkyl, Thioaryl, Alkalimetallcarboxylat, Alkalimetallsulfonat und quaternärem Ammoniumsalz; und
- p eine ganze Zahl von 1 bis 10 ist, und
(b) der wahlweise freie Radikalinitiator ausgewählt ist aus:
- organischen Peroxiden, Wasserstoffperoxiden, Perestern und Percarbonaten;
- anorganischen Persulfaten;
- Azoverbindungen; und
- Redoxsystemen, einschließlich Kombinationen aus einer oder mehreren Verbindungen, die ausgewählt sind aus der Gruppe bestehend aus Wasserstoffperoxid, Alkylperoxiden, Eisensalzen, Titansalzen, Zinkformaldehyd-sulfoxylat, Natriumformaldehyd-sulfoxylat, Alkalimetall- oder Ammoniumpersulfaten, Alkalimetall- oder Ammoniumperboraten, Alkalimetall- oder Ammoniumperchloraten, Alkalimetallbisulfiten, Arylphosphinsäuren und Ascorbinsäure.

11. Verfahren nach Anspruch 6, wobei das N-Oxylradikal ausgewählt ist aus der Gruppe bestehend aus:
- stabilen freien β-substituierten Nitroxidradikalen, tert-Butyl 1-phenyl-2-methylpropylnitroxid, tert-Butyl 1-(2-naphthyl)-2-methylpropylnitroxid, tert-Butyl 1-diethylphosphono-2,2-dimethylpropylnitroxid, tert-Butyl 1-dibenzylphosphono-2,2-dimethylpropylnitroxid, Phenyl 1-diethylphosphono-2,2-dimethylpropylnitroxid, Phenyl 1-diethylphosphono-1-methylethylnitroxid und 1-Phenyl-2-methylpropyl 1 -diethylphosphono-1-methylethylnitroxid; und
- N-Oxylradikalen, umfassend ein Spiro-Ringsystem, 8,8-Dimethyl-10-oxa-7-azaspiro[5.5]undecan-7-oxyl, 7,7-Dimethyl-9-oxa-6-aza-spiro[4.5]decan-6-oxyl und 2,2,6,6-Tetramethyl-1-aza-4-thia-cyclohexan-1,4,4-trioxid;
und wobei der wahlweise freie Radikalinitiator ausgewählt ist aus:
- organischen Peroxiden, Wasserstoffperoxiden, Perestern und Percarbonaten;
- anorganischen Persulfaten;
- Azoverbindungen;
- Redoxsystemen einschließlich Kombinationen aus einer oder mehreren Verbindungen, ausgewählt aus der Gruppe bestehend aus Wasserstoffperoxid, Alkylperoxiden, Eisensalzen, Titansalzen, Zinkformaldehyd-sulfoxylat, Natriumformaldehyd-sulfoxylat, Alkalimetall- oder Ammoniumpersulfaten, Alkalimetall- oder Ammoniumperboraten, Alkalimetall- oder Ammoniumperchloraten, Alkalimetallbisulfiten, Arylphosphinsäuren und Ascorbinsäure; und
- Thiatriazolylradikalen, Dithiadiazolylradikalen oder 2,5-Dihydro-1H-1,2,4-triazol-2-yl-Radikalen.

12. Verfahren nach Anspruch 6, wobei das H-Oxylradikal in einem Anteil von 0,005 Gew% bis 5 Gew% des polymerisierbaren Monomers vorliegt.

13. Verfahren nach Anspruch 6, das in einem Bereich von Polymerisationstemperaturen von 50°C bis 180°C durchgeführt wird.

14. Verfahren nach Anspruch 7, wobei das auf Schwefel basierende Kettentransfermittel ausgewählt ist aus der Gruppe bestehend aus:
- vinylogen Dithoestern, Benzyl 3,3-di(benzylthio)prop-2-endithioat und 3-Benzylthio-5,5-dimethylcyclohex-2-en-1-thion,
- Thiocarbonylthioverbindungen mit α-Stickstoffatomen, Benzyl 1-pyrrol-carbodithioat, Benzyl 1-(2-pyrrolidinon)carbodithioat, 2-Cyano-but-2-yl 1-pyrrolcarbodithioat und 2-Cyanoprop-2-yl 1-pyrrolcarbodithioat,
- Benzyl (1,2-benzoldicarboximido)carbodithioat,
- Dithiocarbamaten,
- Thiocarbonylthioverbindungen mit einem α-Sauerstoffsubstituenten, O-Ethyl S-(1-phenylethyl)xanthat, O-Ethyl S-(2-(ethoxycarbonyl)prop-2-yl)xanthat, O-Ethyl S(2-cyanoprop-2-yl)xanthat, O-Ethyl S(2-cyanoprop-2-yl) xanthat, O-Ethyl S-cyanomethylxanthat, O-Phenyl S-benzylxanthat und O-Pentafluorphenyl S-benzylxanthat,
- bis(Thiocarbonyl)disulfiden,
- 2-Cyano-2-butyldithiobenzoat und
- Benyzl 1-imidazolcarbodithioat.

15. Verfahren nach Anspruch 7, das in einem Bereich von Polymerisationstemperaturen von 40°C bis 110°C durchgeführt wird.

16. Verfahren nach Anspruch 4, das bei Temperaturen von 20°C bis 55°C durchgeführt wird.

17. Polymersegment nach Anspruch 1 mit einem zahlengemittelten Molekulargewicht im Bereich von 1.200 bis 15.000.

## Revendications

1. Un segment de polymère d' un monomère acrylique avec un indice de polydispersité (PDI) s' étendant à partir de 1,05 jusqu' à 1,30 et un poids moléculaire moyen en nombre s' étendant à partir de 600 jusqu' à 50.000 , ledit segment de polymère étant terminé par un groupe ou atome sélectionné à partir du groupe constitué d' halogène , nitroxyde , xanthate et thiocarbonylthio , **caractérisé en ce que** ledit monomère est sélectionné à partir du groupe constitué de l' acrylate de 1-éthoxyethyle , l' acrylate de 1-méthoxyethyle , l' acrylate de 1-isopropoxyéthyle , l' acrylate de 1-*iso*-butoxyéthyle , l' acrylate de 1-(*tert*-butoxy)-éthyle, l' acrylate de 1-éthoxyméthyle , l' acrylate de 1-méthoxyméthyle , l' acrylate de 1-isopropoxyméthyle , l' acrylate de 1-butoxyméthyle , l' acrylate de 1 - (*tert-*butoxy)méthyle , l' acrylate de 1-éthylthioéthyle , l' acrylate de 1-méthylthioéthyle , l' acrylate de 1-isopropylthioéthyle , l' acrylate de 1-butylthioéthyle , l' acrylate de 1-(*tert* butyl)thioéthyle , l' acrylate de 1-éthylthiométhyle , l' acrylate de 1-méthylthiométhyle , l' acrylate de 1-isopropylthiométhyle , l' acrylate de 1-butylthiométhyle , l' acrylate de 1-(*tert-*butyl)thiométhyle, l' acrylate de 1-éthoxyéthyle , le méthacrylate de 1-méthoxyéthyle , le méthacrylate de 1-isopropoxyéthyle , le méthacrylate de 1-butoxyéthyle , le méthacrylate de 1-(*tert-*butoxy)éthyle , le méthacrylate de 1-éthoxyméthyle , le méthacrylate de 1-méthoxyméthyle , le méthacrylate de 1-isopropoxyméthyle , le méthacrylate de 1-iso-butoxyméthyle , le méthacrylate de 1-(*tert*-butoxy)méthyle , le méthacrylate de 1-éthylthioéthyle , le méthacrylate de 1-méthylthioéthyle , le méthacrylate de 1-isopropylthioéthyle , le méthacrylate de 1-butylthioéthyle , le méthacrylate de 1-(*tert*-butyl)thioéthyle , le méthacrylate de 1-éthylthiométhyle , le méthacrylate de 1-méthylthiométhyle , le méthacrylate de 1-isopropylthiométhyle , le méthacrylate de 1-butylthiométhyle , et le méthacrylate de 1-(*tert-*butyl)thiométhyle .

2. Un segment de polymère conforme à la revendication 1 , dans lequel ledit atome terminal est chloro ou bromo .

3. Un segment de polymère conforme à la revendication 1 ou à la revendication 2 , dans lequel ledit monomère est l' acrylate de 1-éthoxyéthyle .

4. Une méthode pour fabriquer un segment de polymère conforme à l'une quelconque des revendications 1 à 3 , ledit segment de polymère étant terminé par un atome d' halogène , comprenant le fait de polymériser ledit monomère sous une atmosphère inerte, à une température s' étendant à partir de 20 °C jusqu' à 110 °C , en présence d' un système d' initiation comprenant un composé de métal de transition , un ligand pour solubiliser ledit métal de transition et un initiateur ayant un atome transférable radicalement , ledit ligand étant sélectionné à partir du groupe constitué de 1,10-phénanthroline , cryptands , K 222 , éthers couronne , 18-couronne-6-éther , monoxyde de carbone , porphyrines , porphycènes , éthylènediamine , propylènediamine , *N,N,N',N",N"*-pentaméthyldiéthylène-triamine , tris[2-(diméthylamino)éthyl]amine , amino-alcools , aminopropanol , aminoéthanol , diglyme , éther diméhylique du triéthylèneglycol , pentaoxapentadécane , cyclopentadiényle , cyclooctadiényle et norbornadiényle .

5. Une méthode pour fabriquer un segment de polymère conforme à l'une quelconque des revendications 1 à 3 , ledit segment de polymère étant terminé par un groupe xanthate , comprenant le fait de polymériser ledit monomère sous des conditions MADIX en présence en présence d' un système d' initiation comprenant au moins un composé portant une fonctionnalité xanthate et le cas échéant en présence d' un ou plusieurs initiateurs de radicaux libres.

6. Une méthode pour fabriquer un segment de polymère conforme à l'une quelconque des revendications 1 à 3 , ledit segment de polymère étant terminé par un groupe nitroxyde , comprenant le fait de polymériser ledit monomère sous des conditions NMP en présence d' un système d' initiation comprenant au moins un radical N-oxyle et le cas échéant en présence d' un ou plusieurs initiateurs de radicaux libres.

7. Une méthode pour fabriquer un segment de polymère conforme à l'une quelconque des revendications 1 à 3 , ledit segment de polymère étant terminé par un groupe thiocarbonylthio , comprenant le fait de polymériser ledit monomère sous des conditions RAFT en présence d' un système d' initiation comprenant au moins un agent de transfert de chaîne à base de soufre et le cas échéant en présence d' un ou plusieurs initiateurs de radicaux libres.

8. La méthode de la revendication 4 , dans laquelle :
(a) l'initiateur a la formule générale R₁₁R₁₂R₁₃CX dans laquelle :
- X est halogène ; et
- R₁₁ , R₁₂ et R₁₃ sont chacun indépendamment sélectionnés à partir du groupe constitué de hydrogène , halogène , C₁₋₄ alcoyle dans lequel un ou plusieurs atomes d' hydrogène sont remplacés le cas échéant par halogène , C₃₋₁₀ cycloalcoyle , hydroxyle , cyano , vinyle , oxiranyle , glycidyle , et aryle substitué le cas échéant avec un ou plusieurs C₁₋₄ alcoyle et / ou halogène , à condition que pas plus de deux parmi R₁₁, R₁₂ et R₁₃ soit hydrogène ; ou
(b) le composé de métal de transition est le monochlorure de cuivre , le mono-bromure de cuivre , le dichlorure de zinc ou le dibromure de zinc .

9. La méthode de la revendication 4 , dans laquelle :
- la proportion molaire du composé de métal de transition par rapport à l'initiateur est de 0,01 : 1 à 10 : 1 ; ou
- la proportion molaire du ligand par rapport au composé de métal de transition est de 1 : 1 à 2 : 1 ; ou
- la proportion molaire du ligand par rapport à l'initiateur est de 0,5 : 1 à 10 : 1.

10. La méthode de la revendication 5 , dans laquelle :
(a) le composé portant une fonctionnalité xanthate a la formule générale :
R²-[O-C(=S)-S-R¹]ₚ (I)
dans laquelle
- R² est un groupe sélectionné à partir du groupe constitué de alcoyle , acyle , aryle , alcényle , alcynyle , cycloalcoyle , cycloalcényle , cycloalcynyle et hétérocyclique , ledit groupe étant substitué par un ou plusieurs atome(s) d' halogéne indépendamment sélectionnés à partir du groupe constitué de fluoro , chloro et bromo ,
- R¹ est un groupe sélectionné à partir du groupe constitué de alcoyle , acyle , aryle , alcényle , alcynyle , cycloalcoyle , cycloalcényle , cycloalcynyle et hétérocyclique , ledit groupe étant le cas échéant substitué par un ou plusieurs substituants indépendamment sélectionnés à partir du groupe constitué de aryle , alcoxy-carbonyle , aryloxycarbonyle , carboxyle , thiocarboxyle , acyloxy , carbamoyle , cyano, alcoylcarbonyle , alcoylarylcarbonyle , arylcarbonyle , arylalcoylcarbonyle , phthalimido , maléimido , succinimido , amidino , guanidino , hydroxyle , sulfhydryle , amino , halogène , allyle , époxy , alcoxy, cycloalcoxy, aryloxy , thioalcoyle , thioaryle , carboxylate de métal alcalin , sulfonate de métal alcalin et sel d' ammonium quaternaire ; et
- p est un nombre entier de 1 à 10 , et
(b) l' initiateur de radicaux libres optionnel est sélectionné à partir de :
- peroxydes , hydroperoxydes , peresters et percarbonates organiques ;
- persulfates inorganiques ;
- composés azo ; et
- systèmes redox comprenant des combinaisons d' un ou plusieurs composés sélectionnés à partir du groupe constitué du peroxyde d' hydrogène , des peroxydes d' alcoyle , sels de fer , sels de titane , zinc formaldéhyde - sulfoxylate , sodium formaldéhyde - sulfoxylate , persulfates de métal alcalin ou d' ammonium , perborates de métal alcalin ou d' ammonium , perchlorates de métal alcalin ou d' ammonium , bisulfites de métal alcalin , acides arylphosphiniques et acide ascorbique .

11. La méthode de la revendication 6, dans laquelle ledit radical N-oxyle est sélectionné à partir du groupe constitué de :
- des radicaux libres nitroxyde β-substitués, *tert*-butyl 1-phényl-2-methylpropyl nitroxyde , *tert*-butyl 1-(2-naphthyl)-2-méthylpropyl nitroxyde , *tert*-butyl 1-diéthylphosphono-2,2-diméthylpropyl nitroxyde , *tert*-butyl 1-dibenzylphosphono-2,2-diméthylpropyl nitroxyde , phényl 1-diéthylphosphono-2,2-diméthylpropyl nitroxyde , phényl 1-diéthylphosphono-1-méthylethyl nitroxyde et 1-phényl-2-méthylpropyl 1-diéthylphosphono-1-méthyléthyl nitroxyde ; et
- des radicaux N-oxyle comprenant un système d' anneau spiro , 8,8-diméthyl-10-oxa-7-aza-spiro[5.5]undécan-7-oxyle , 7,7-diméthyl-9-oxa-6-aza-spiro[4.5]décan-6-oxyle et 2,2,6,6-tétraméthyl-1-aza-4-thia-cyclohexane-1,4,4-trioxyde ;
et dans lequel l' initiateur de radicaux libres optionnel est sélectionné à partir de :
- peroxydes , hydroperoxydes , peresters et percarbonates organiques ;
- persulfates inorganiques ;
- composés azo ;
- systèmes redox comprenant des combinaisons d' un ou plusieurs composés sélectionnés à partir du groupe constitué du peroxyde d' hydrogène , des peroxydes d' alcoyle , sels de fer , sels de titane , zinc formaldéhyde - sulfoxylate , sodium formaldéhyde - sulfoxylate , persulfates de métal alcalin ou d' ammonium , perborates de métal alcalin ou d' ammonium , perchlorates de métal alcalin ou d' ammonium , bisulfites de métal alcalin , acides arylphosphi-niques et acide ascorbique ; et
- radicaux thiatriazolyle , radicaux dithiadiazolyle ou radical 2,5-dihydro-1H-1,2,4-triazol-2-yle .

12. La méthode de la revendication 6 , dans laquelle ledit radical N-oxyle est dans une proportion de 0,005 % jusqu' à 5 % en poids du monomère polymérisable .

13. La méthode de la revendication 6 , étant réalisée dans une gamme de températures de polymérisation à partir de 50 °C jusqu' à 180 °C .

14. La méthode de la revendication 7 , dans laquelle ledit agent de transfert de chaîne à base de soufre est sélectionné à partir du groupe constitué de :
- dithioesters vinyliques , 3,3-di(benzylthio)prop-2-ènedithioate de benzyle et 3-benzylthio-5,5-diméthylcyclohex-2-ène-1-thione ,
- composés thiocarbonylthio avec des atomes α-azotés , 1-pyrrole-carbodithioate de benzyle, 1-(2-pyrrolidinone)carbodithioate de benzyle, 1-pyrrolecarbodithioate de 2-cyano-but-2-yle et 1-pyrrolecarbodithioate de 2-cyanoprop-2-yle ,
- (1,2-benzènedicarboximido)carbodithioate de benzyle ,
- dithiocarbamates,
- composés thiocarbonylthio avec un substituant α-oxygéne , O-éthyl S-(1-phényléthyl)xanthate , O-éthyl S-(2-(éthoxycarbonyl)prop-2-yl)xanthate , O-éthyl S-(2-cyanoprop-2-yl)xanthate , O-éthyl S-(2-cyanoprop-2-yl)xanthate , O-éthyl S-cyanomethyl xanthate , O-phényl S-benzyl xanthate et O-pentafluorophényl S-benzyl xanthate ,
- bisulfures de bis(thiocarbonyle),
- 2-cyano-2-butyldithiobenzoate , et
- 1-imidazolecarbodithioate de benzyle .

15. La méthode de la revendication 7 , étant réalisée dans une gamme de températures de polymérisation à partir de 40 °C jusqu' à 110 °C .

16. La méthode de la revendication 4 , étant réalisée à des températures à partir de 20 °C jusqu'à 55 °C .

17. Un segment de polymère conforme à la revendication 1 , ayant un poids moléculaire moyen en nombre s' étendant à partir de 1.200 jusqu' à 15.000 .
